# EUROPEAN PATENT SPECIFICATION

(11) **EP 3 838 607 B1**
(45) Date of publication and mention of the grant of the patent: **04.11.2026**
(21) Application number: 19218501.5
(22) Date of filing: 20.12.2019
(51) Int. Cl.: B41M 5/00, B41J 11/00, C09D 11/54

(54) **TUNING OF PRIMER BEHAVIOR THROUGH CLOUD POINT MANIPULATION**
ABSTIMMUNG DES PRIMERVERHALTENS DURCH TRÜBUNGSPUNKTMANIPULATION
RÉGLAGE DU COMPORTEMENT D'UN APPRÊT PAR LA MANIPULATION DU POINT DE TROUBLE

(43) Date of publication of application: 23.06.2021
(73) Proprietor: Canon Production Printing Holding B.V., 5914 HH Venlo (NL)
(72) Inventor: VAN DIJKMAN, Thomas F., 5914 HH Venio (NL); TURKENBURG, Daniël H., 5914 HH Venio (NL)
(74) Representative: Canon Production Printing IP Department

(56) References cited:
- EP-A1- 3 401 097
- WO-A1-2018/017076
- WO-A1-2018/017307

## Description

### FIELD OF THE INVENTION

The present invention relates to methods of direct printing using a pre-treatment liquid and cloud point manipulation for adjusting a wetting behavior on a recording medium, direct printing apparatuses for carrying out these methods, a pre-treatment liquid that can be used in these methods, and an ink set comprising the pre-treatment liquid and at least one ink.

### BACKGROUND ART

In direct printing, where the ink is applied directly on a recording medium, suitable ink spread and/or penetration is usually required for different recording media. Broadening of recording media range, improving of print robustness and suppression of paper curl are core targets in direct printing, e.g. using latex-based inks. Thus, it is desirable to control ink spread and penetration on different recording media.

Addressing these issues form the ink composition perspective only is complex and usually at a tense relation with the jetting accuracy of the ink. Inks usually contain particles (latex, pigment) that are sensitive with respect to solid deposition at the nozzle, which inhibits jettability. Further, suppression of paper curl is traditionally addressed by components added to the ink.

One way of further controlling ink spread or penetration in direct printing is the use of specific pre-treatment liquids, also called primers, which are applied to the recording medium prior to printing the ink. Also, a primer could be a much more effective means to prevent curl, because it is the first component to contact the medium, and usually travels more deeply than ink components. For pre-treatment liquids / primers, the deposited amount and location/pattern is free to choose and can be adapted for each medium and is not prescribed by the image to be printed as is the case for ink deposition. Consequently the formulation freedom for inks should be increased and the ink composition could be simplified when using suitable primers.

In direct printing applications, e.g. industrial inkjet applications, primers are used to improve the print quality, i.e. enhanced spreading and pigment pinning and reduction of inter color bleeding, as well as mechanical aspects of printing, including ink-substrate adhesion promotion, reduction of pigment loss due to substrate penetration, print robustness, prevention of substrate deformation / curl upon drying, etc. Ideal primer behavior is therein different for recording media that is not solvent-absorbing and/or not porous, e.g. coated media, and for recording media that are solvent- absorbing and/or porous, e.g. uncoated media. In case of not solvent-absorbing and/or not porous, eg. coated, media, the main function of the primer is to prevent inter-color bleeding, which is ideally achieved by application of a small quantity of well spreading primer. Larger quantities usually cause robustness issues. For solvent- absorbing and/or porous, e.g. uncoated, media, on the other hand, inter-color bleeding and robustness are typically not the main problems. They require a primer that prevents/compensates paper curl, and mottling or dull color appearance associated to pigment loss. In this case the primer is usually applied in much larger quantities - spreading is therefore no issue, and the primer is more effective when it has strongly absorptive characteristics. In order to ameliorate paper curl, the primer should travel deep into the medium to avoid uneven stress distribution. To address either of the two problems, different primer compositions have been proposed in the state of the art.

For example, primers influencing the spreading are e.g. disclosed in US 9,403,383 and WO 2017/060153 A1. Further primers are disclosed in WO 2011/159371 A9, US 6,426,375 B1, WO 2011/099977 A1, but in these documents there is no differentiation between spreading and penetration.

WO 2018/017307 A1 discloses an inkjet ink set comprising a pre-treatment fixing fluid (primer) including calcium-containing crashing agents, at least a co-solvent, one or more surfactants and a balance of water.

WO 2018/017076 A1 discloses a pre-treatment fixing fluid (primer) for an offset coated medium. The pre-treatment fixing fluid includes calcium-containing cationic crashing agents consisting of calcium propionate and calcium nitrate. The pre-treatment fixing further includes a co-solvent, a surfactant, and a balance of water. The surfactant is selected from the group consisting of a first surfactant having a first hydrophilic lipophilic balance (HLB) value within a hydrophobic range and a combination of the first surfactant and a second surfactant having a second HLB value within a water dispersible range.

EP 3401097 A1 discloses an inkjet recording method which is characterized in that, when using a water-repellent porous body to absorb and remove a water-containing fluid from an image that contains an aqueous liquid component and a colorant, the aqueous liquid component is absorbed and removed from the image by the porous body after the surface of said porous body contacting the image has been treated with a wetting liquid having a contact angle of less than 90° with respect to the contact surface.

Another option would be to provide suitable primers for different recording media in one printer. This, however, requires the use of multiple primers, which would require bigger printers, more complicated logistics, increased cost and maintenance.

It is thus an object of the present invention to provide a direct printing method where the behavior of the pre-treatment liquid can be switched depending on the applied recording medium, and wherein a pre-treatment liquid / primer is optimized for both spreading and penetration.

### SUMMARY OF THE INVENTION

The inventors found that a pre-treatment liquid / primer can be optimized regarding their cloud point in order to penetrate deeper into a solvent-absorbing and/or porous medium, e.g. paper, where curl and paper curl needs to be addressed, or they can be optimized with respect to spreading properties at the surface, which is more efficient in suppression of inter-color bleeding. Optimization with respect to either two cases can be achieved by a mild adjustment from a standard composition, e.g. by adjusting a mixing ratio of two surfactants, a mild dilution, or adding small quantity of a solvent, or a mild adjustment of the printing conditions, e.g. substrate temperature, relative humidity. Disclosed is thus an optimization of a primer formulation for not solvent-absorbing and/or non-porous recording media, e.g. coated media, and for solvent-absorbing and/or porous recording media, e.g. uncoated media, by tuning of its cloud point. Particularly a spreading surfactant that can be switched off e.g. through temperature control is combined with a penetrating surfactant that is insensitive to switching.

A first aspect of the present invention relates to a method of direct printing, comprising
- providing a recording medium;
- providing a pre-treatment liquid comprising a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18;
- adjusting the temperature of at least one surface of the recording medium to a temperature Tₚᵣᵢₙₜ below the cloud point T_{c}, preferably at most 5°C below the cloud point T_{c}, further preferably at most 3°C below the cloud point T_{c}, of the pre-treatment liquid in case the recording medium is not a solvent-absorbing and/or a non-porous recording medium, or adjusting the temperature of at least one surface of the recording medium to a temperature above the cloud point T_{c}, preferably at most 9°C above the cloud point T_{c}, further preferably at most 5°C above the cloud point T_{c}, of the pre-treatment liquid medium in case the recording medium is a solvent-absorbing and/or a porous recording medium;

- applying the pre-treatment liquid on the at least one surface of the recording medium with the temperature adjusted below the cloud point T_{c} of the pre-treatment liquid or above the cloud point T_{c} of the pre-treatment liquid; and
- printing an image with at least one ink on the recording medium pre-treated with the pre-treatment liquid.

A second aspect of the present invention relates to a method of direct printing, comprising
- providing a recording medium;
- providing a first liquid comprising a first surfactant and a second liquid comprising a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18;
- preparing a pre-treatment liquid by mixing the first liquid and the second liquid;
- applying a pre-treatment liquid on at least one surface of the recording medium; and
- printing an image with at least one ink on the recording medium pre-treated with the pre-treatment liquid, wherein

the mixing ratio of the first and second liquid is adjusted such that the cloud point T_{c} of the pre-treatment liquid is above the temperature Tₚᵣᵢₙₜ of the at least one surface of the recording medium when applying the pre-treatment liquid on the at least one surface of the recording medium in case the recording medium is not a solvent-absorbing and/or a non-porous recording medium, or wherein
the mixing ratio of the first and second liquid is adjusted such that the cloud point T_{c} of the pre-treatment liquid is below the temperature Tₚᵣᵢₙₜ of the at least one surface of the recording medium when applying the pre-treatment liquid on the at least one surface of the recording medium in case the recording medium is a solvent-absorbing and/or a porous recording medium.

Furthermore disclosed is a direct printing apparatus, comprising,
- a unit for providing a recording medium, configured to provide a recording medium;
- at least one application unit for applying a pre-treatment liquid on at least one surface of the recording medium, configured to apply a pre-treatment liquid on at least one surface of the recording medium, wherein

the pre-treatment liquid comprises a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB > 18;
   - at least one unit for printing an ink, configured to print an ink on the recording medium pre-treated with the pre-treatment liquid;
further comprising:
   - at least one heating or cooling unit configured to heat or cool the at least one surface of the recording medium such that the temperature Tₚᵣᵢₙₜ of the at least one surface of the recording medium is below the cloud point T_{c}, preferably at most 5°C below the cloud point T_{c}, further preferably at most 3°C below the cloud point T_{c}, of the pre-treatment liquid at the application of the pre-treatment liquid on the at least one surface of the recording medium in case the recording medium is not a solvent-absorbing and/or a non-porous recording medium, or such that the temperature Tₚᵣᵢₙₜ of the at least one surface of the recording medium is above the cloud point T_{c} of the pre-treatment liquid at the application of the pre-treatment liquid on the at least one surface of the recording medium in case the recording medium is a solvent-absorbing and/or a porous recording medium, preferably prior to applying the pre-treatment liquid; and/or
   - at least one mixing unit for the pre-treatment liquid, configured to mix the pre-treatment liquid prior to applying the pre-treatment liquid in such a way that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium.

In addition, the present invention is directed to a direct printing apparatus, comprising,
- a unit for providing a recording medium, configured to provide a recording medium;
- at least one first application unit for applying a first liquid comprising a first surfactant on at least one surface of the recording medium, configured to apply the first liquid comprising the first surfactant on at least one surface of the recording medium,
- at least one second application unit for applying a second liquid comprising a second surfactant on the same at least one surface of the recording medium, configured to apply the second liquid comprising the second surfactant on the same at least one surface of the recording medium, wherein

the first surfactant is an alkoxylated surfactant, preferably an ethoxylated surfactant with a hydrophilic-lipophilic balance (HLB) <16, and the second surfactant is a hydrotrope and/or has a HLB > 18;
   - at least one unit for printing an ink, configured to print an ink on the recording medium pre-treated with a pre-treatment liquid formed on the at least one surface of the recording medium by mixing of the first liquid comprising the first surfactant and the second liquid comprising a second surfactant;
further comprising:
   - at least two first dosing units for the first liquid comprising the first surfactant and the second liquid comprising the second surfactant, respectively, configured to dose the first liquid comprising the first surfactant and the second liquid comprising the second surfactant in such a way that the cloud point T_{c} of a pre-treatment liquid formed on the at least one surface of the recording medium by mixing of the first liquid comprising the first surfactant and the second liquid comprising the second surfactant is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, or that the cloud point T_{c} of the pre-treatment liquid formed on the at least one surface of the recording medium by mixing of the first liquid comprising the first surfactant and the second liquid comprising the second surfactant is below the temperature Tₚᵣᵢₙₜ of the at least one surface of the recording medium when forming the pre-treatment liquid on the at least one surface of the recording medium in case the recording medium is a solvent-absorbing and/or a porous recording medium.

Furthermore disclosed is a pre-treatment liquid comprising a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18, wherein the first surfactant is chosen from acetylenic nonionic surfactants, alcohol ethoxylates, nonionic silicone surfactants, and/or fluorinated nonionic surfactants, and/or wherein the second surfactant is chosen from amineoxide based surfactants, anionic surfactants, zwitterionic surfactant, amphotheric surfactants, sugar surfactants, and/or alkanediols.

Also disclosed is an ink set, comprising the present pre-treatment liquid and at least one ink.

Further aspects and embodiments of the invention are dis-closed in the dependent claims and can be taken from the following description, figures and examples, without being limited thereto.

### FIGURES

The enclosed drawings should illustrate embodiments of the present invention and convey a further understanding thereof. In connection with the description they serve as explanation of concepts and principles of the invention. Other embodiments and many of the stated advantages can be derived in relation to the drawings. The elements of the drawings are not necessarily to scale towards each other. Identical, functionally equivalent and acting equal features and components are denoted in the figures of the drawings with the same reference numbers, unless noted otherwise.
Fig. 1 shows schematically a method of the present invention.
In Fig. 2 a further method of the present invention is schematically shown.
Figs. 3 to 5 depict schematically embodiments of a direct printing apparatus according to the present invention.
A further direct printing apparatus in accordance with an embodiment of the present invention is shown in Fig. 6.
Figs. 7 to 10 show results of data obtained in the present Examples.

### DETAILED DESCRIPTION

### DEFINITIONS

Unless defined otherwise, technical and scientific terms used herein have the same meaning as commonly understood by one of ordinary skill in the art to which this invention belongs.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination, and any combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

The hydrophilic-lipophilic balance (HLB) of a surfactant is a measure of the degree to which it is hydrophilic or lipophilic, determined by calculating values for the different regions of the molecule, as described by Griffin. The HLB is calculated as follows: HLB = 20 * Mₕ/M, with Mₕ being the molecular mass of the hydrophilic portion of the molecule, and M being the molecular mass of the whole molecule. A result in a scale from 0 to 20 is then obtained, with 0 being obtained for a completely hydrophobic/lipophilic molecule, and 20 for a completely hydrophilic/lipophobic molecule. It can be suitably determined and is known for surfactants.

The cloud point T_{c} of a mixture comprising a surfactant is the temperature at which the mixture starts to phase-separate, and two phases appear, thus becoming cloudy. The cloud point of the primer can be easily determined visually by eye. The transition is generally very sharp (from highly transparent below T_{c} to intensely opaque above T_{c} within a temperature shift of 0.2 degrees Celsius) and well reproducible (when many heating-cooling cycles are repeated the cloud point is always observed at the same temperature). According to certain embodiments, the cloud point is determined by the following method: 15mL of a pre-treatment liquid / primer is placed in a glass vessel containing a thermometer. The sample is heated well above the estimated cloud point (T_{c} + 5 to 10 degrees Celsius) by heating the glass vessel with hot tap-water or a hairdryer type hot air supply. Evaporation of the sample should be avoided. The sample is stirred while cooling down slowly to ensure temperature homogeneity throughout the sample. When the sample becomes transparent enough to read a printed text of font size 8 (e.g. Arial) in transmission through the vessel the samples is considered clear. As long as the text cannot be read the sample is considered turbid. The transition between both situations is marked as the cloud point. Alternatively the cloud point can be determined by performance of a turbidity measurement which is based on optical transmission as well. The cloud point can be predicted for primer formulation by means of interpolation. Alternatively, the cloud point can be used to verify the concentration of one of the components used to formulate the primer.

Hydrotropes are compounds that solubilize hydrophobic compounds in aqueous solutions by means other than micellar solubilization. Typically, hydrotropes consist of a hydrophilic part and a hydrophobic part - similar to surfactants. However, the hydrophobic part is generally too small to cause spontaneous self-aggregation, so that hydrotropes do not have a critical concentration above which self-aggregation spontaneously starts to occur.

A direct printing method is a method wherein an image is formed on the recording medium by applying the ink directly thereon, in contrast to an indirect printing method where the image is first printed on a transfer medium and then transferred to the recording medium. A direct printing apparatus is an apparatus for carrying out a direct printing method.

Amounts within the present invention are given in wt.%, unless not stated otherwise or clear from context.

In a first aspect the present invention relates to a method of direct printing, comprising
- providing a recording medium;
- providing a pre-treatment liquid comprising a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18;
- adjusting the temperature of at least one surface of the recording medium to a temperature Tₚᵣᵢₙₜ below the cloud point T_{c}, preferably at most 5°C below the cloud point T_{c}, further preferably at most 3°C below the cloud point T_{c}, of the pre-treatment liquid in case the recording medium is not a solvent-absorbing and/or a non-porous recording medium, or adjusting the temperature of at least one surface of the recording medium to a temperature above the cloud point T_{c}, preferably at most 9°C above the cloud point T_{c}, further preferably at most 5°C above the cloud point T_{c}, of the pre-treatment liquid medium in case the recording medium is a solvent-absorbing and/or a porous recording medium;
- applying the pre-treatment liquid on the at least one surface of the recording medium with the temperature adjusted below the cloud point T_{c} of the pre-treatment liquid or above the cloud point T_{c} of the pre-treatment liquid; and
   - printing an image with at least one ink on the recording medium pre-treated with the pre-treatment liquid, preferably on the at least one surface of the recording medium.

A second aspect of the present invention relates to a method of direct printing, comprising
- providing a recording medium;
- providing a first liquid comprising a first surfactant and a second liquid comprising a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18;
- preparing a pre-treatment liquid by mixing the first liquid and the second liquid;
- applying a pre-treatment liquid on at least one surface of the recording medium; and
- printing an image with at least one ink on the recording medium pre-treated with the pre-treatment liquid, preferably on the at least one surface of the recording medium, wherein the mixing ratio of the first and second liquid is adjusted such that the cloud point T_{c} of the pre-treatment liquid is above the temperature Tₚᵣᵢₙₜ of the at least one surface of the recording medium when applying the pre-treatment liquid on the at least one surface of the recording medium in case the recording medium is not a solvent-absorbing and/or a non-porous recording medium, or wherein
the mixing ratio of the first and second liquid is adjusted such that the cloud point T_{c} of the pre-treatment liquid is below the temperature Tₚᵣᵢₙₜ of the at least one surface of the recording medium when applying the pre-treatment liquid on the at least one surface of the recording medium in case the recording medium is a solvent-absorbing and/or a porous recording medium.

The following description applies to both aspects of the invention if suitable, as at least some of the steps are at least similar or identical. According to certain embodiments, some of the steps are identical in the methods.

The providing of the recording medium is not particularly restricted and can be done manually or automatically. It can be provided from the inside of a direct printing apparatus or from the outside.

The recording medium is not particularly restricted as the methods are adapted to print on a specific recording medium.

According to certain embodiments, the recording medium is detected in the present methods and the setting of the temperature of the recording medium and/or the mixing ratio of the first and second liquid and/or the pre-treatment liquid is determined based on the type of recording medium. This can be done automatically.

In the present methods, the adjusting the temperature of at least one surface of the recording medium to a temperature Tₚᵣᵢₙₜ and/or the adjusting the mixing ratio of the first and second liquid is determined based on the recording medium used to have optimal functionality of the pre-treatment liquid based on the recording medium used. It was found that by adjusting either of these the relation between the cloud point T_{c} and the temperature of at least one surface of the recording medium Tₚᵣᵢₙₜ can be suitably set, either by toggling the cloud point T_{c} of the pre-treatment liquid directly by mixing different ratios of first and second liquid, particularly thus different ratios of the first and second surfactant, which directly influence the cloud point, and/or by adjusting the temperature of the at least one side of the recording medium so that the cloud point set by a certain mixing ratio of the first and second surfactant is below or above the temperature Tₚᵣᵢₙₜ of the at least one side of the recording medium when the pre-treatment liquid is applied or formed on the recording medium by mixing the first and second liquid. The temperature of at least one surface of the recording medium Tₚᵣᵢₙₜ is particularly achieved when applying or forming the pre-treatment liquid, but can also be obtained beforehand and maintained until the pre-treatment liquid is applied or formed on the at least one surface of the recording medium.

Thus, the adjusting the temperature of at least one surface of the recording medium to a temperature Tₚᵣᵢₙₜ and/or the adjusting the mixing ratio of the first and second liquid depends on the record medium to be printed upon, and this can be suitably selected and/or set in the present methods. With the present methods thus also a switching of recording media in a certain direct printing apparatus is easily possible as upon switching the recording medium the temperature of at least one surface of the recording medium to a temperature Tₚᵣᵢₙₜ and/or the mixing ratio of the first and second liquid can again be suitably adjusted based on the recording medium. The mixing ratio therein particularly is a mass ratio.

In this regard it is also possible to use a database where the different cloud points of different mixing ratios of first and second liquid, respectively pre-treatment liquid - e.g. obtained by mixing the first and second liquid or by mixing components corresponding to the first and second liquid, are saved and available. Depending on the applied record medium then the most suitable mixing ratio can be determined and/or the recording medium can be adjusted in temperature in at least one side depending on the pre-treatment liquid.

As recording medium either a not a solvent-absorbing and/or a non-porous recording medium or a solvent-absorbing and/or a porous recording medium are considered.

The not solvent-absorbing and/or non-porous recording medium therein is particularly characterized in that the pre-treatment liquid - as well as an ink to be applied - is not penetrating into the recording medium. For these media, spreading properties are of particular interest. According to certain embodiment, the not solvent-absorbing and/or non-porous recording medium is not water-absorbing and particularly cannot be penetrated by water. Examples of the not solvent-absorbing and/or non-porous recording medium are non-porous metal-based recording media, e.g. metal foils like aluminium foils, plastic foils, coated recording media, e.g. machine coated recording media, coated with e.g. polymer-based coatings, etc.

By adjusting the temperature of at least one surface of the recording medium to a temperature Tₚᵣᵢₙₜ below the cloud point T_{c}, e.g. at most 20°C or 10°C below the cloud point T_{c}, preferably at most 5°C below the cloud point T_{c}, further preferably at most 3°C below the cloud point Tc, e.g. even 2°C or 1°C or just below the cloud point T_{c} of the pre-treatment liquid, and/or by adjusting the mixing ratio of the first and second liquid, thus the ratio of first and second surfactant, such that the cloud point T_{c} of the pre-treatment liquid is above the temperature Tₚᵣᵢₙₜ, e.g. at most 20°C, 10°C, preferably at most 5°C, further preferably at most 3°C, e.g. at most 2°C or 1°C or just above the temperature Tₚᵣᵢₙₜ, of the at least one surface of the recording medium when applying the pre-treatment liquid on the at least one surface of the recording medium in case the recording medium is not a solvent-absorbing and/or a non-porous recording medium, spreading of the pre-treatment liquid on the at least one surface of the recording medium is facilitated. The nearer the temperature to the cloud point, or the closer the cloud point is to the temperature Tₚᵣᵢₙₜ, particularly when the pre-treatment liquid is applied, the better is the spreading of the pre-treatment liquid on the at least one surface of the recording medium. The same is the case if the pre-treatment liquid is mixed on the at least one surface of the recording medium, e.g. when applying the latter of the first and second liquid.

The solvent-absorbing and/or porous recording medium is particularly characterized in that it can be penetrated by a solvent, e.g. due to its porosity or due to the solvent-absorbing properties, e.g. due to capillary forces, etc. For these media, penetration properties are of particular interest. According to certain embodiments, the solvent-absorbing and/or porous recording medium is at least absorbing water and/or can be penetrated by water. In the case of these media, it is also conceivable that the whole recording medium is soaked by the pre-treatment liquid, such that the pre-treatment liquid is not only present one the at least one side of the recording medium, but can also be present on e.g. the other side / backside of the recording medium, so that printing on both sides is feasible without treating the backside Exemplary solvent-absorbing and/or porous recording media are cellulose-based materials like paper, cardboard, textiles, etc.

By adjusting the temperature of at least one surface of the recording medium to a temperature Tₚᵣᵢₙₜ above the cloud point T_{c}, e.g. at most 20°C or 10°C above the cloud point T_{c}, preferably at most 9°C above the cloud point T_{c}, further preferably at most 5°C above the cloud point Tc, e.g. even 4°C, 3°C, 2°C or 1°C or just above the cloud point T_{c} of the pre-treatment liquid, and/or by adjusting the mixing ratio of the first and second liquid, thus the ratio of first and second surfactant, such that the cloud point T_{c} of the pre-treatment liquid is below the temperature Tₚᵣᵢₙₜ, e.g. at most 20°C, 10°C, preferably at most 9°C, further preferably at most 5°C, e.g. at most 4°C, 3°C, 2°C or 1°C or just below the temperature Tₚᵣᵢₙₜ, of the at least one surface of the recording medium when applying the pre-treatment liquid on the at least one surface of the recording medium in case the recording medium is a solvent-absorbing and/or a porous recording medium, penetration of the pre-treatment liquid on the at least one surface of the recording medium is facilitated. The nearer the temperature to the cloud point, or the closer the cloud point is to the temperature Tₚᵣᵢₙₜ, particularly when the pre-treatment liquid is applied, the better is the penetration of the pre-treatment liquid into the recording medium. The same is the case if the pre-treatment liquid is mixed on the at least one surface of the recording medium, e.g. when applying the latter of the first and second liquid.

When applying the pre-treatment liquid or the first and second liquid separately it is not excluded to heat or cool the pre-treatment liquid or the first and/or second liquid such that the temperature of the pre-treatment liquid is near the cloud point when applying or forming the pre-treatment liquid.

The step of providing a pre-treatment liquid comprising a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18, in the method of the first aspect is not particularly restricted. Also the step of providing a first liquid comprising a first surfactant and a second liquid comprising a second surfactant, wherein the first surfactant is an ethoylated surfactant with a hydrophilic-lipophilic balance (HLB) <16, and the second surfactant has a HLB >18, in the method of the second aspect is not particularly restricted. However, the first surfactant and second surfactant are the same in the methods of the first and second aspect. The pre-treatment liquid can be provided in the method of the first aspect also in separate liquids, e.g. the first and second liquids of the method of the second aspect, and be premixed before applying it, or the components thereof can all be premixed separately, etc. Also in the method of the second aspect components of the first and second liquid can be mixed together before applying the respective liquid, e.g. if the respective liquids contain further components than the first and second surfactant, e.g. salts, solvents and/or co-solvents, and/or other components usually contained in pre-treatment liquids / primers for direct printing.

The pre-treatment liquid is, respectively the first and second liquid are, not particularly restricted as long as it, respectively they, contain the first and second surfactant. In the method of the second aspect, the first and second liquid form the pre-treatment liquid formed in the method of the first aspect.

The first surfactant is alkoxylated, preferably ethoxylated, and has a HLB < 16, and the second surfactant is a hydrotrope and/or has a HLB > 18. There is no particular lower limit for the HLB of the first surfactant, and no particular upper limit for the HLB of the second surfactant, except for the theoretical lower and upper limits of 0 and 20, respectively. In principle, the cloud point T_{c} will become lower the lower the HLB of the first surfactant is. In general the chemical activity of the surfactant is dependent on the temperature to the extent that if that surfactant has a cloud point and that temperature is exceeded, the activity decreases to almost zero. Regarding the second surfactant, it does not show this dependence, so that their upper limit is not restricted.

According to certain embodiments, a preferred range of HLB values for the first and/or second surfactant, particularly the first surfactant, also depends on the salt concentration of the pre-treatment liquid / primer. Particularly, for pre-treatment liquids with higher salinity good spreading properties are observed at higher HLB values. According to certain embodiments, the first surfactant has a HLB higher than 1, e.g. higher than 2, 3, 4 or 5, e.g. higher than 6 or 7. For the second surfactant, in case of extremely hydrophilic (non ethoxylated) surfactants such as N,N-dimethyl laurylamineoxide the observed behavior appears even more hydrophilic compared to a conventional alkoxylated, preferably ethoxylated surfactant of HLB 20, so that according to certain embodiments extremely hydrophilic surfactants can be used.

The first surfactant is an alkoxylated surfactant, preferably an ethoxylated surfactant, particularly an alkoxylated superwetter, preferably an ethoxylated superwetter, as they are known also for printing applications. It was found that non-alkoxylated surfactants usually do not have a cloud point, and therefore their chemical activity is normally not dependent on the temperature to the extent that if that surfactant has a cloud point and that temperature is exceeded, the activity decreases to almost zero. Thus, an alkoxylated surfactant, preferably an ethoxylated surfactant is used as first surfactant.

It was found that the most efficient alkoxylated surfactants, preferably ethoxylated surfactants, particularly superwetters, as first surfactant are surfactants which have a relatively low HLB of <16, which means that they are relatively hydrophobic and they typically have in common that their molecular shape does not allow them to assemble into micellar structures easily. According to certain embodiments, the hydrophobic part of the molecule of the first surfactant is branched, and preferably a side-branch is ideally located close to where the hydrophilic part of the molecule is attached to the hydrophobic part, and/or it is geometrically constrained. Particularly, acetylenic groups contain a triple bond which limits bending and rotational movement of the molecule, so that first surfactants with acetylenic groups are preferred.

According to certain embodiments of the first and second aspect, the first surfactant is chosen from acetylenic nonionic surfactants, alcohol ethoxylates, nonionic silicone surfactants, and/or fluorinated nonionic surfactants, preferably acetylenic nonionic surfactants.

Examples of the first surfactant are acetylenic nonionic surfactants, preferably alkoxylated, preferably ethoxylated acetylenic glycols, particularly with a C6 to C20 skeleton (carbon skeleton), preferably with a C10 to C18 skeleton, e.g. a C12 to C16 skeleton, e.g. Surfynol^{®} products based on a hydrophobic branched C14 skeleton / carbon core and/or Dynol products based on a hydrophobic branched C16 skeleton, alcohol ethoxylates, preferably isopropyl alcohol alkoxylates, preferably ethoxylates including Multiwet SU, nonionic silicone surfactants, preferably nonionic silicone surfactants which contain a branched polydimethylsiloxane group as the hydrophobic part of the surfactant, like tegowet240, and/or fluorinated nonionic surfactants.

The second surfactant is chosen from hydrotropes and/or surfactant molecules which have a very high HLB-value of >18, e.g. those commonly used as emulsifiers.

According to certain embodiments of the first and second aspect, the second surfactant is chosen from amineoxide based surfactants, anionic surfactants, zwitterionic surfactant, amphotheric surfactants, sugar surfactants, and/or alkanediols.

A preferred second surfactant is - according to certain embodiments - chosen from amineoxide based surfactants, e.g. N,N-dimethyllauryl amineoxide; high HLB anionic surfactants, e.g. sodium 2-ethyl hexylsulfate; high HLB zwitterionic / amphoteric surfactants, e.g. chosen from Tomamine products, e.g. diproprionate amphoteric surfactants; sugar surfactants, e.g. alkylglucosides which includes products like Multitrope; and/or alkanediols, more specifically vicinal glycols including 1,2-hexanediol, 1,2-pentanediol, 1,2-butane diol, and/or propylene glycol.

According to certain embodiments of the first and second aspect, a weight ratio of the first surfactant to the second surfactant is in a range from 2:1 to 4:1, preferably in a range from 2.2 :1 to 3.8:1, further preferably in a range between and including 2.5:1 to 3.5:1, e.g. between 3:1 and 3.5:1, e.g. 3:1 or 3.5:1. When the ratio of first surfactant to second surfactant is increased, e.g. from 2: 1 to 2.5:1 and further to 3:1 or 3.5:1, the cloud point can be increased, and a difference between the cloud point of the pre-treatment liquid and the temperature of the recording medium can be increased according to certain embodiments, so that penetration on solvent-absorbing and/or porous recording media like paper is enhanced in contrast to spreading.

The content of the first and second surfactant is not particularly restricted as it can be adjusted to achieve a certain cloud point, and can be the usual content of surfactants in pre-treatment liquids. For example, the first and/or second surfactant can be contained in an amount between 0.1 and 10 wt.%, e.g. between 0.2 and 7 wt.%, e.g. between 0.3 and 6 wt.%, e.g. between 0.5 and 5 wt.%, e.g. between 0.7 and 4 wt.%, e.g. between 1.0 and 3.5 wt.%, e.g. between 1.2 and 3.2 wt.%, based on the pre-treatment liquid, wherein the ratio - and thus the content - of both can be suitably set according to the recording medium.

In the method of the first aspect, the step of adjusting the temperature of at least one surface of the recording medium is not particularly restricted, and can be done by suitably heating or cooling at least one surface of the recording medium using at least one heating or cooling unit, which is not particularly restricted. Heating or cooling can be done also on more than one surface of the recording medium, e.g. on a front side and back side, e.g. for duplex printing. For printing on one side, adjusting the temperature of this side is sufficient, though. Heating or cooling can be done directly or indirectly, e.g. by including a heater or cooler in a transport unit of the recording medium, e.g. a belt, snares, drums, etc., and/or above the transport unit, e.g. based on convectional heating and/or radiation heating, e.g. IR (infrared) heating. According to certain embodiments, adjusting the temperature is carried out by heating.

In the first method, furthermore the applying of the pre-treatment liquid on the at least one surface of the recording medium with the temperature adjusted below the cloud point T_{c} of the pre-treatment liquid or above the cloud point T_{c} of the pre-treatment liquid is not particularly restricted, and usual application units for applying a pre-treatment liquid can be used, like nozzles, jets, rolls, etc., and the pre-treatment liquid can be sprayed, transferred via roll, etc.

Also, in the method of the second aspect the pre-treatment liquid can be applied as in the method of the first aspect.

Alternatively, also the pre-treatment liquid can be applied in the form of the first liquid comprising the first surfactant and the second liquid comprising the second surfactant separately, and the pre-treatment liquid can be formed on the at least one side of the recording medium. Also in this case the application of the first and second liquid is not particularly restricted, and they can be applied by nozzles, jets, rolls, etc., by spraying, transfer via roll, etc.

According to certain embodiments of the first and second aspect, the applying a pre-treatment liquid on the at least one surface of the recording medium comprises applying a first liquid comprising the first surfactant and a second liquid comprising the second surfactant separately and forming the pre-treatment liquid on the at least one surface of the recording medium.

In the method of the second aspect, furthermore the preparing a pre-treatment liquid by mixing the first liquid and the second liquid is not particularly restricted. It can be mixed separately or in a unit from which the pre-treatment liquid is applied, or it can be mixed on the recording medium, e.g. by diffusion mixing, etc. According to certain, preferred, embodiments the pre-treatment liquid is applied already in mixed form on the at least one surface of the recording medium.

The printing of an image with at least one ink on the recording medium pre-treated with the pre-treatment liquid is not particularly restricted, and the ink can be again applied via nozzles, jets, etc., e.g. as in inkjet printing, etc. The ink is preferably applied on the at least one surface of the recording medium, particularly if the recording medium is not a solvent-absorbing and/or a non-porous recording medium, as the pre-treatment liquid cannot usually reach the other side. On the other hand, in case of a solvent-absorbing and/or porous recording medium both sides of the recording medium can be soaked by the pre-treatment liquid if is soaked, so that theoretically printing an image could be done on either or both surfaces of the recording medium. However, also in such a case printing image on the at least one surface pre-treated with the pre-treatment liquid is preferred to avoid further complexity in the direct printing apparatus.

In the present methods, the pre-treatment liquid, respectively the first and second liquid, comprise the first and second surfactant. Particularly, in the first and second liquids, components can be suitably combined for enhanced mixing, e.g. by putting dissolvable components in a suitable solvent.

Apart from the first and second surfactant further components as usually used in pre-treatment liquids in direct printing can be contained. According to certain embodiments, at least one solvent is contained, which is not particularly restricted, and can be e.g. water and/or an organic solvent, e.g. water.

Also, one or more co-solvents can be used for good jettability. Co-solvents may have multiple functions, e.g. adapting the rheological behavior of the reaction liquid and/or preventing drying of the pre-treatment liquid or first and/or second liquid in the respective application, which drying may lead to precipitation of e.g. a metal salt contained in the pre-treatment liquid or the first and/or second liquid. While some co-solvents may improve penetration, some may improve spreading, so that a certain co-solvent may further be added in view of the recording medium. For example, the cloud point of the pre-treatment liquid can increase if the content of polyethylene glycol increases. Thus, it is also possible to further adjust the cloud point of the pre-treatment liquid by introducing one or more co-solvents.

The co-solvent is not particularly restricted. Co-solvents similarly used in (aqueous) ink compositions may be suitably used. Examples of suitable co-solvents are water-soluble organic solvents such as polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of water-soluble organic solvents include (but are not limited to): glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol monobutyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol monoethyl ether acetate, 1,2-hexanediol, 1,2-pentanediol and 1,2-butanediol. According to certain embodiments, at least two co-solvents are used. According to certain embodiments, a mixture of water-soluble organic solvents may be comprised.

The content of a co-solvent is not particularly restricted and can be as usual in pre-treatment liquids / primers. According to certain embodiments, at least one co-solvent is comprised in an amount of 1 wt.% to 40 wt.%, e.g. in an amount of 3 wt.% to 30 wt.%, e.g. in an amount of 5 wt.% to 20 wt.%, relative to the total content of the pre-treatment liquid.

Also, further components can be contained in the first and second liquid, respectively the pre-treatment liquid, like salts, etc., as well as usual components, like pH regulators, etc.

According to certain embodiments the pre-treatment liquid contains at least one salt, which can be suitably added or be included in the first or second liquid.

According to certain embodiments of the first and second aspect, the pre-treatment liquid further comprises at least one salt, which can contain a cation that is preferably chosen from polyvalent metal ions like Ca²⁺, Mg²⁺, Sr²⁺, Zn²⁺, Cu²⁺, Ni²⁺, Fe³⁺, Cr³⁺ and/or Al³⁺. Preferable is at least one alkaline earth salt, e.g. a Ca and/or Mg salt, further preferably at least one Mg salt. The salt can be a salt from an inorganic or organic acid, which are not particularly restricted. Different salts can therein have a different influence on the cloud point. For example, salts like acetate, maleate and pidolate salts, particularly of Mg, can increase the cloud point compared to nitrate salts, e.g. Mg nitrate, and thus can be more preferred for solvent-absorbing and/or porous recording media like paper. On the other hand, salts like sulfate, succinate and glutamate salts, e.g. of Mg, can lead to a lower cloud point of the pre-treatment liquid, and thus can be better suited for not solvent-absorbing and/or non-porous recording media like coated media. According to certain embodiments, a preferred counter ion in the salt is chosen from maleate, sulphate, pidolate, succiniate, glutamate (glutamate being less preferred), nitrate, halogenide, and/or acetate, preferably nitrate, halogenide, and/or acetate, e.g. nitrate, and/or

The content of the at least one salt is not particularly restricted. According to certain embodiments, the pre-treatment liquid comprises between 1 wt.% and 70 wt.%, e.g. 5 wt.% and 70 wt.%, e.g. between 10 wt.% and 60 wt.%, preferably between 15 wt.% and 50 wt.%, e.g. between 20 wt.% and 40 wt.%, with reference to the total composition. The amount of salt is usually limited to the maximum solubility of the salt. The saturation degree (actual concentration / maximum solubility *100%) of the salt in the pre-treatment liquid can be between 10% and 100%, e.g. between 15% and 95%, e.g. between 20% and 80%. The cloud point can be affected by salinity, being generally lower in more saline fluids.

According to certain embodiments of the first and second aspect, during applying a pre-treatment liquid on the at least one surface of the recording medium the relative humidity of the recording medium is adjusted and/or the pre-treatment liquid is diluted with a solvent which is not particularly restricted, and may be e.g. chosen from water, polyols, betaines, alcohol ethoxylates, etc.. A dilution therein, e.g. with a small amount of solvent, e.g. less than 5, 4, 3, 2 or 1 wt.%, based on the pre-treatment liquid, can be carried out e.g. together with or after applying or forming the pre-treatment liquid, but before applying the at least one ink. By adjusting the humidity also a dilution effect may be achieved. By changing the humidity also a small change in the pre-treatment liquid composition may be achieved so that the cloud point can be further adjusted.

In the present methods the at least one ink is not particularly restricted, and one ink of more than one ink, as e.g. used in color printing, may be applied.

According to certain embodiments, the ink comprises dispersed particles. The dispersed particles may be colorant particles, in particular pigment particles, and/or latex particles. Examples of suitable inks are aqueous pigmented inks and latex inks, wherein the particles present in the ink (e.g. pigment particles and/or latex particles) are e.g. sensitive to reacting with a metal salts present in the primer compositions according to the present invention. Such ink compositions are for example disclosed in the published International Patent Application WO2013/131924, in particular in the Examples and the cited prior art, which are hereby incorporated by reference.

The colorant particles may be a pigment or a mixture of pigments, a dye or a mixture of dyes or a mixture comprising pigments and dyes, as long as the colorant is water dispersed. Examples of the pigment usable in the present invention include those commonly known without any limitation, and either a water-dispersed pigment or an oil-dispersed pigment is usable. For example, an organic pigment such as an insoluble pigment or a lake pigment, as well as an inorganic pigment such as carbon black, is preferably usable. Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, 25 C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal based pigments (e.g., copper, iron (C.I. Pigment Black 11), and titanium oxide; and organic pigments (e.g., aniline black (C.I. Pigment Black 1).

The amount of the water-insoluble pigment contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing a degradation in ink ejection stability.

The ink may contain a water-dispersed resin (latex resin) in view of the pigment fixability to recording media. As the water-dispersed resin, a water-dispersed resin excellent in film formability (image formability) and having high water repellency, high waterfastness, and high weatherability is useful in recording images having high waterfastness and high image density (high color developing ability). Examples of the water-dispersed resin include synthetic resins and natural polymer compounds. Examples of the synthetic resins include polyester resins, polyurethane resins, polyepoxy resins, polyamide resins, polyether resins, poly(meth)acrylic resins, acrylsilicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid based resins, unsaturated carboxylic acid-based resins and copolymers such as styrene- acrylate copolymer resins, styrene-butadiene copolymer resins. Examples of the natural polymer compounds include celluloses, rosins, and natural rubbers.

In certain embodiments, the water dispersed resin used in the present invention may be made of a resin having a water soluble functional group such as a carboxylic group or a sulfonic group. In certain embodiments, the ink/ ink composition comprises a resin having a carboxylic group which has a small dissociation rate from the viewpoint of producing high speed aggregation effect of the water-dispersed resin. Since a carboxylic acid group tends to be influenced by a pH change, a dispersion state changes easily and its aggregation property is high. Examples of resins suitable for use in ink compositions according to the present embodiment are: an acrylic resin, a vinyl acetate resin, a styrene butadiene resin, a vinyl chloride resin, an acrylic styrene resin, a butadiene resin and styrene resin. As for the resin component of the water-dispersed resin, it is preferable that it is a polymer having both a hydrophilic portion and a hydrophobic part in the molecule. By having a hydrophobic part, it is possible that a hydrophobic part will be orientated to the inside of the water-dispersed resin, and a hydrophilic portion will be effectively orientated to the outside of the water-dispersed resin. As a result, the change of a dispersion state in response to the pH change of a liquid will become larger, and aggregation of the ink will be performed more efficiently.

Examples of commercially available water-dispersed resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-633 NeoCryl A-1131, NeoCryl A-2091, NeoCryl A-550, NeoCryl BT-101, NeoCryl SR-270, NeoCryl XK-52, NeoCryl XK-39, NeoCryl XK-205, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-36, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the water-dispersed resin emulsion is not limited to these examples.

As the fluorine-based resin, fluorine-based resin fine particles having a fluoroolefin unit are preferred. Of these, fluorine-containing resin fine particles containing a fluoroolefin unit and a vinylether unit are particularly preferable. The fluoroolefin unit is not particularly limited and may be suitably selected in accordance with the intended use. Examples thereof include - CF2CF2-, -CF2CF(CF3)-, and -CF2CFCl-. The vinylether unit is not particularly limited and may be suitably selected in accordance with the intended use. Examples thereof include - C(Ra)HC(ORb)-; wherein Ra is a hydrogen atom or a methyl group; and wherein Rb may be selected from the group consisting of -CH2Rc, -C2H4Rc, -C3H6Rc, -C4H8Rc and -C5H10Rc, wherein Rc is selected from the group consisting of a hydrogen atom (-H), an hydroxy group (-OH) or a carboxylic acid group (-COOH).

As the fluorine-containing vinylether-based resin fine particles containing a fluoroolefin unit and a vinylether unit, an alternated copolymer, in which the fluoroolefin unit and the vinylether unit are alternately copolymerized, is preferable. As such a fluorine-based resin fine particles, a suitably synthesized compound may be used and a commercially available product may be used. Examples of the commercially available products include FLUONATE FEM-500 and FEM-600, DICGUARD F-52S, F-90, F-90M, F-90N and AQUAFURFURAN TE-5A produced by Dainippon Ink Chemical Industries Co., Ltd.; LUMIFLON FE4300, FE4500, FE4400, ASAHI GUARD AG-7105, AG-950, AG-7600, 25 AG-7000, and AG- 1100 produced by Asahi Glass Co., Ltd.

The water-dispersed resin may be used in the form of a homopolymer, a copolymer or a composite resin, and all of water-dispersed resins having a monophase structure or core-shell structure and those prepared by power-feed emulsion polymerization may be used. As the water-dispersed resin, it is possible to use a resin which in itself has a hydrophilic group and hence has a certain degree of self-dispersibility, and a resin which in itself has no dispersibility but to which the dispersibility is imparted with use of a surfactant and/or another resin having a hydrophilic group. Among these resins, an emulsion of a resin obtained by emulsion polymerization or suspension polymerization of an ionomer of a polyester resin or a polyurethane resin is most suitably used. In the case of emulsion polymerization of an unsaturated monomer, a resin dispersion is obtained by initiating a polymerization reaction in the dispersed monomer phase in the monomer in water emulsion. A polymerization initiator, a surfactant, a chain transfer agent, a chelating agent and a pH adjustor may be added to the monomer in water emulsion.

Thus, a water-dispersed resin can be easily obtained, and the desired properties are easily obtained because the resin components can be varied. The content of the water-dispersed resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersed resin contained in the ink, as a solid content, is 2.5 weight% to 15 weight%, and more preferably 3 weight% to 7 weight%, relative to the total ink composition.

Inks may comprise additives such as co-solvents and surfactants which are not limited to any kind and may be similar to the co-solvents and surfactants used in reaction liquids according to the present invention as described above.

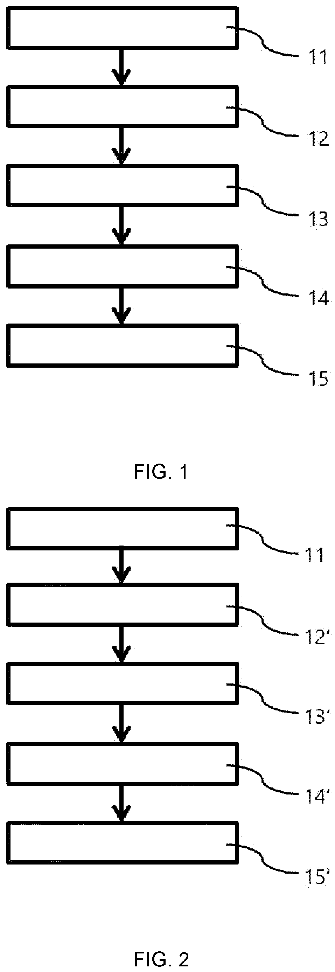

A method of the first aspect is shown schematically shown in Fig. 1. After a step of providing a recording medium 11 a step of providing a pre-treatment liquid comprising a first surfactant and a second surfactant follows, wherein the first surfactant is an alkoxylated surfactant, preferably an ethoxylated surfactant with a hydrophilic-lipophilic balance (HLB) <16, and the second surfactant is a hydrotrope and/or has a HLB >18. Thereafter a step of adjusting the temperature of at least one surface of the recording medium to a temperature Tₚᵣᵢₙₜ below the cloud point T_{c} of the pre-treatment liquid in case the recording medium is not a solvent-absorbing and/or a non-porous recording medium, or adjusting the temperature of at least one surface of the recording medium to a temperature above the cloud point T_{c} of the pre-treatment liquid medium in case the recording medium is a solvent-absorbing and/or a porous recording medium 13 is carried out, followed by a step of applying the pre-treatment liquid on the at least one surface of the recording medium with the temperature adjusted below the cloud point T_{c} of the pre-treatment liquid or above the cloud point T_{c} of the pre-treatment liquid 14, and a step of printing an image with at least one ink on the recording medium pre-treated with the pre-treatment liquid 15.

A method of the second aspect is shown schematically shown in Fig. 2. After a step of providing a recording medium 11 a step of providing a first liquid comprising a first surfactant and a second liquid comprising a second surfactant 12' follows , wherein the first surfactant is an alkoxylated surfactant, preferably an ethoxylated surfactant with a hydrophilic-lipophilic balance (HLB) <16, and the second surfactant is a hydrotrope and/or has a HLB >18. Thereafter, a step of preparing a pre-treatment liquid by mixing the first liquid and the second liquid 13' follows, then a step of applying the pre-treatment liquid on at least one surface of the recording medium 14' and a step of printing an image with at least one ink on the recording medium pre-treated with the pre-treatment liquid 15, wherein the mixing ratio of the first and second liquid is adjusted such that the cloud point T_{c} of the pre-treatment liquid is above the temperature Tₚᵣᵢₙₜ of the at least one surface of the recording medium when applying the pre-treatment liquid on the at least one surface of the recording medium in case the recording medium is not a solvent-absorbing and/or a non-porous recording medium, or wherein the mixing ratio of the first and second liquid is adjusted such that the cloud point T_{c} of the pre-treatment liquid is below the temperature Tₚᵣᵢₙₜ of the at least one surface of the recording medium when applying the pre-treatment liquid on the at least one surface of the recording medium in case the recording medium is a solvent-absorbing and/or a porous recording medium.

A third aspect of the present invention relates to a direct printing apparatus, comprising,
- a unit for providing a recording medium, configured to provide a recording medium;
- at least one application unit for applying a pre-treatment liquid on at least one surface of the recording medium, configured to apply a pre-treatment liquid on at least one surface of the recording medium, wherein

the pre-treatment liquid comprises a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB > 18;
   - at least one unit for printing an ink, configured to print an ink on the recording medium pre-treated with the pre-treatment liquid, preferably on the at least one surface of the recording medium;
further comprising:
   - at least one heating or cooling unit configured to heat or cool the at least one surface of the recording medium such that the temperature Tₚᵣᵢₙₜ of the at least one surface of the recording medium is below the cloud point T_{c}, preferably at most 5°C below the cloud point T_{c}, further preferably at most 3°C below the cloud point T_{c}, of the pre-treatment liquid at the application of the pre-treatment liquid on the at least one surface of the recording medium in case the recording medium is not a solvent-absorbing and/or a non-porous recording medium, or such that the temperature Tₚᵣᵢₙₜ of the at least one surface of the recording medium is above the cloud point T_{c}, preferably at most 9°C above the cloud point T_{c}, further preferably at most 5°C above the cloud point T_{c}, of the pre-treatment liquid at the application of the pre-treatment liquid on the at least one surface of the recording medium in case the recording medium is a solvent-absorbing and/or a porous recording medium, preferably prior to applying the pre-treatment liquid; and/or
   - at least one mixing unit for the pre-treatment liquid, configured to mix the pre-treatment liquid prior to applying the pre-treatment liquid in such a way that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium,
preferably wherein the mixing of the pre-treatment liquid is carried out using at least one dosing unit for a first liquid comprising the first surfactant and/or a second liquid comprising the second surfactant, configured to dose the first liquid comprising the first surfactant and/or the second liquid comprising the second surfactant such that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium.

With the direct printing apparatus according to the third aspect of the present invention particularly methods of the first and second aspect of the present invention can be carried out. Accordingly, descriptions and embodiments with regard to the methods of the present invention are also applicable to the direct printing apparatus of the third aspect, and vice versa.

In the direct printing apparatus the unit for providing a recording medium, configured to provide a recording medium, is not particularly restricted, and can be any suitable unit normally used in direct printing apparatuses.

Also the at least one application unit for applying a pre-treatment liquid on at least one surface of the recording medium, configured to apply a pre-treatment liquid on at least one surface of the recording medium, is not particularly restricted. It can be a dispenser, nozzle, jet, roll, etc. Also a plurality of application units for applying a pre-treatment liquid can be contained, particularly as the pre-treatment liquid should be applied on the whole at least one side of the recording medium. It is furthermore not excluded that also at least one application unit for applying a pre-treatment liquid is provided for applying a pre-treatment liquid on the other side of the recording medium, e.g. when using duplex printing, particularly when a not solvent-absorbing and/or non-porous recording medium is used.

Furthermore, also the at least one unit for printing an ink, configured to print an ink on the recording medium pre-treated with the pre-treatment liquid, preferably on the at least one surface of the recording medium, is not particularly restricted. It can be a nozzle, jet, printhead, etc., e.g. as used in direct, e.g. inkjet, printing. Again, more than one unit for printing an ink can be contained for one type of ink, and also one or a multitude of units for printing different types of ink, as e.g. in multicolor printing, can be contained. Furthermore, also more than one unit for printing an ink can be contained in case duplex printing is carried out, for printing on the other side of the recording medium.

The direct printing apparatus of the third aspect of the invention can comprise at least one heating or cooling unit configured to heat or cool the at least one surface of the recording medium, as defined. Apart from that the heating or cooling unit is not restricted. It can be included in a transport unit for the recording medium which is configured to transport medium and is not particularly restricted, e.g. a belt, snares, drums, etc., e.g. by including at least one heater and/or cooler in a transport unit of the recording medium, and/or above the transport unit, e.g. based on convectional heating and/or radiation heating, e.g. IR (infrared) heating. According to certain embodiments, at least one heating unit is included, e.g. an IR heater as it can suitably heat at least one surface of the recording medium. However, it is not excluded that a further cooler is included to cool the recording medium, e.g. after applying the pre-treatment liquid and before the applying of the ink, to have a suitable temperature for applying the ink.

Apart from the at least one heating or cooling unit or in addition the direct printing apparatus can comprise at least one mixing unit for the pre-treatment liquid, configured to mix the pre-treatment liquid prior to applying the pre-treatment liquid in such a way that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium. The mixing unit therein is not particularly restricted. The direct printing apparatus of the third aspect contains, however at least one heating or cooling unit of at least one mixing unit.

According to certain embodiments, the mixing unit comprises at least one dosing unit for a first liquid comprising the first surfactant and/or a second liquid comprising the second surfactant, configured to dose the first liquid comprising the first surfactant and/or the second liquid comprising the second surfactant such that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium. It can also comprise two dosing units for dosing the first and second liquid, respectively, as to set a suitable mixing ratio of the first and second liquid, particularly the first and second surfactant. The dosing unit can comprise nozzles, valves, etc. to measure certain amounts of first and/or second liquid, configured to measure respective amounts of the first and/or second liquid.

According to certain embodiments, the direct printing apparatus of the third aspect further comprises a database comprising a set of parameters comprising the thermal behavior and/or the fluid transport properties of the recording medium and/or the data for cloud points T_{c} obtained by mixing different ratios, e.g. mass ratios, of the first surfactant and the second surfactant; and at least one controller for controlling the at least one heating or cooling unit and/or the at least one mixing unit, preferably the at least one dosing unit, such that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium, preferably prior to applying the pre-treatment liquid; or that the cloud point T_{c} of the pre-treatment liquid is below the temperature Tₚᵣᵢₙₜ of the at least one surface of the recording medium at the application of the pre-treatment liquid on the at least one surface of the recording medium is a solvent-absorbing and/or a porous medium, preferably prior to applying the pre-treatment liquid.

The database is not particularly restricted and can comprise further data. It can be connected to a sensor and/or button, etc. indicating a recording medium to be used in a direct printing method, so as to select a suitable set of parameters and/or mass ratios of the first surfactant for the recording medium, and can be connected to the at least one controller so as to set the suitable mixing ratio of first and second surfactant and/or the temperature of the at least one heating or cooling unit to achieve the temperature Tₚᵣᵢₙₜ when applying the pre-treatment liquid to the at least one surface of the recording medium. It is not excluded that the database contains further parameters for printing, and/or that the controller controls further devices of the direct printing apparatus, e.g. the at least one application unit for applying the pre-treatment liquid, e.g. a certain amount thereof, and/or the at least one unit for printing an ink, etc.

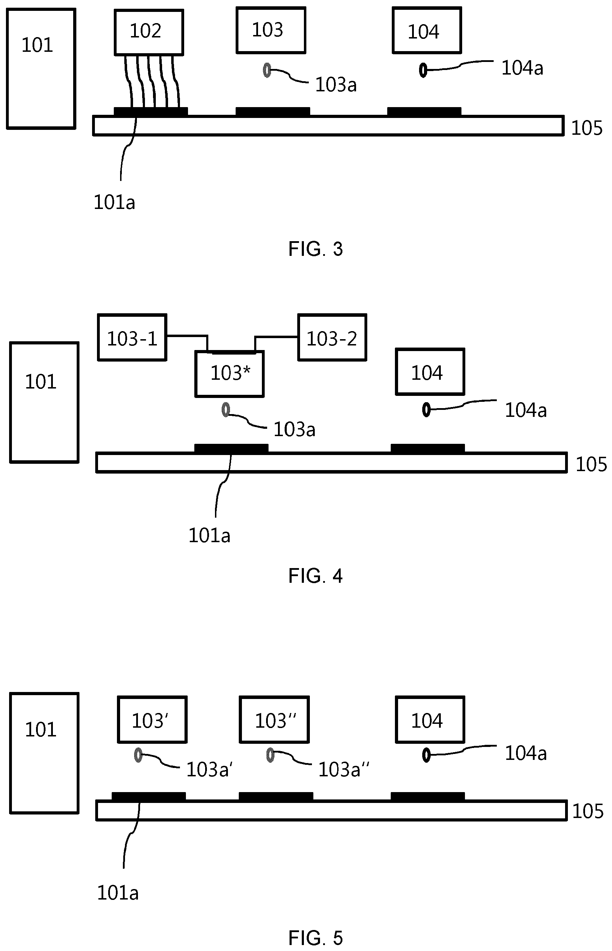

An exemplary direct printing apparatus of the third aspect is schematically shown in Fig. 3. It contains a unit for providing a recording medium 101, an IR heater 102 as heating unit, an application unit for the pre-treatment liquid 103 which applies a pre-treatment liquid 103a to the recording medium 101a, a unit for printing an ink 104 which applies a print 104a, and a transport unit 105.

A second exemplary direct printing apparatus of the third aspect is shown schematically in Fig. 4, comprising the units 101, 104 and 105 as shown in Fig. 3. However, it comprises a mixing unit for the pre-treatment liquid 103* instead of unit 103, from which the pre-treatment liquid is also applied. This unit 103* is supplied by a first dosing unit 103-1 for supplying a first liquid comprising a first surfactant, and a second dosing unit 103-2 for supplying a second liquid comprising a second surfactant. In this apparatus no heater is contained, but can also be contained, and/or a cooler.

A fourth aspect of the present invention relates to a direct printing apparatus, comprising,
- a unit for providing a recording medium, configured to provide a recording medium;
- at least one first application unit for applying a first liquid comprising a first surfactant on at least one surface of the recording medium, configured to apply the first liquid comprising the first surfactant on at least one surface of the recording medium,
- at least one second application unit for applying a second liquid comprising a second surfactant on the same at least one surface of the recording medium, configured to apply the second liquid comprising the second surfactant on the same at least one surface of the recording medium, wherein

the first surfactant is an alkoxylated surfactant, preferably an ethoxylated surfactant with a hydrophilic-lipophilic balance (HLB) <16, and the second surfactant is a hydrotrope and/or has a HLB > 18;
   - at least one unit for printing an ink, configured to print an ink on the recording medium pre-treated with a pre-treatment liquid formed on the at least one surface of the recording medium by mixing of the first liquid comprising the first surfactant and the second liquid comprising a second surfactant, preferably on the at least one surface of the recording medium;
further comprising:
   - at least one dosing unit for the first liquid comprising the first surfactant and/or the second liquid comprising the second surfactant, configured to dose the first liquid comprising the first surfactant and/or the second liquid comprising the second surfactant in such a way that the cloud point T_{c} of a pre-treatment liquid formed on the at least one surface of the recording medium by mixing of the first liquid comprising the first surfactant and the second liquid comprising the second surfactant is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, or that the cloud point T_{c} of the pre-treatment liquid formed on the at least one surface of the recording medium by mixing of the first liquid comprising the first surfactant and the second liquid comprising the second surfactant is below the temperature Tₚᵣᵢₙₜ of the at least one surface of the recording medium when forming the pre-treatment liquid on the at least one surface of the recording medium in case the recording medium is a solvent-absorbing and/or a porous recording medium.

With the direct printing apparatus according to the fourth aspect of the present invention particularly methods of the first and second aspect of the present invention can be carried out. Accordingly, descriptions and embodiments with regard to the methods of the present invention are also applicable to the direct printing apparatus of the third aspect, and vice versa.

In the direct printing apparatus of the fourth aspect the unit for providing a recording medium, the at least one unit for printing an ink, and the at least one dosing unit are not particularly restricted and can be the same as in the direct printing apparatus of the third aspect. The at least one first application unit and the at least one second application unit are not particularly restricted and can be configured like to the at least one application unit for applying a pre-treatment liquid in the third aspect, although as at least two separate units, e.g. as nozzles, jets, rolls, etc.

According to certain embodiments the direct printing apparatus of the fourth aspect further comprises a database comprising a set of parameters comprising the data for cloud points T_{c} obtained by mixing different ratios, e.g. mass ratios, of the first surfactant and the second surfactant; and at least one controller for controlling the at least one dosing unit for the first liquid comprising the first surfactant and/or the second liquid comprising the second surfactant such that the cloud point T_{c} of the formed pre-treatment liquid is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, or that the cloud point T_{c} of the formed pre-treatment liquid is below the temperature Tₚᵣᵢₙₜ of the at least one surface of the recording medium when forming the pre-treatment liquid on the at least one surface of the recording medium in case the recording medium is a solvent-absorbing and/or porous recording medium.

The database and controller can be configured as in the direct printing apparatus of the third aspect, with the difference that the database may contain data for the first and second liquid as well, and that the controller controls delivery of the first and/or second liquid to set a suitable mixing ratio.

According to certain embodiments the direct printing apparatus of the fourth aspect further comprises at least one heating or cooling unit configured to heat or cool the at least one surface of the recording medium to a temperature Tₚᵣᵢₙₜ below the cloud point T_{c}, preferably at most 5°C below the cloud point T_{c}, further preferably at most 3°C below the cloud point T_{c}, of the pre-treatment liquid when forming the pre-treatment liquid on the at least one surface of the recording medium in case the recording medium is not a solvent-absorbing and/or a non-porous recording medium, preferably prior to the forming of the pre-treatment liquid on the at least one surface of the recording medium; or to a temperature above the cloud point T_{c}, preferably at most 9°C above the cloud point T_{c}, further preferably at most 5°C above the cloud point T_{c}, of the pre-treatment liquid when forming the pre-treatment liquid on the at least one surface of the recording medium in case the recording medium is a solvent-absorbing and/or a porous recording medium, preferably prior to the forming of the pre-treatment liquid on the at least one surface of the recording medium. The at least one heating or cooling unit are not particularly restricted and can be configured as in the direct printing apparatus of the third aspect. In such embodiments the database, if present, can also contain data for the temperature Tₚᵣᵢₙₜ and/or data for suitable heating or cooling temperatures, and the at least one controller, if present, can control the at least one heating or cooling unit.

According to certain embodiments the direct printing apparatus of the fourth aspect the database further comprises a set of parameters comprising the thermal behavior and/or the fluid transport properties of the recording medium (this can be also the case in the database of the apparatus of the third aspect); and the at least one controller controls the at least one heating or cooling unit such that the cloud point T_{c} of the pre-treatment liquid is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, preferably prior to the forming of the pre-treatment liquid on the at least one surface of the recording medium; or that the cloud point T_{c} of the pre-treatment liquid is below the temperature Tₚᵣᵢₙₜ of the at least one surface of the recording medium when forming the pre-treatment liquid on the at least one surface of the recording medium in case the recording medium is a solvent-absorbing and/or a porous recording medium, preferably prior to the forming of the pre-treatment liquid on the at least one surface of the recording medium.

An exemplary direct printing apparatus of the fourth aspect is shown schematically in Fig. 5. It contains the unit for providing a recording medium 101, the unit for printing an ink 104 and the transport unit 105 shown in Fig. 3 and 4. However, the pre-treatment liquid is mixed on the recording medium 101a by applying a first liquid 103a' containing the first surfactant from the first dosing unit 103', and by applying the second liquid 103a" containing the second surfactant from the first dosing unit 103" on top thereof and letting both liquids mix before applying ink 104a.

The direct printing apparatuses of the third and fourth aspects can also contain units usually contained in direct printing apparatuses, like at least one fixation unit, shutters for controlling liquid and/or heat or cooling application, etc.

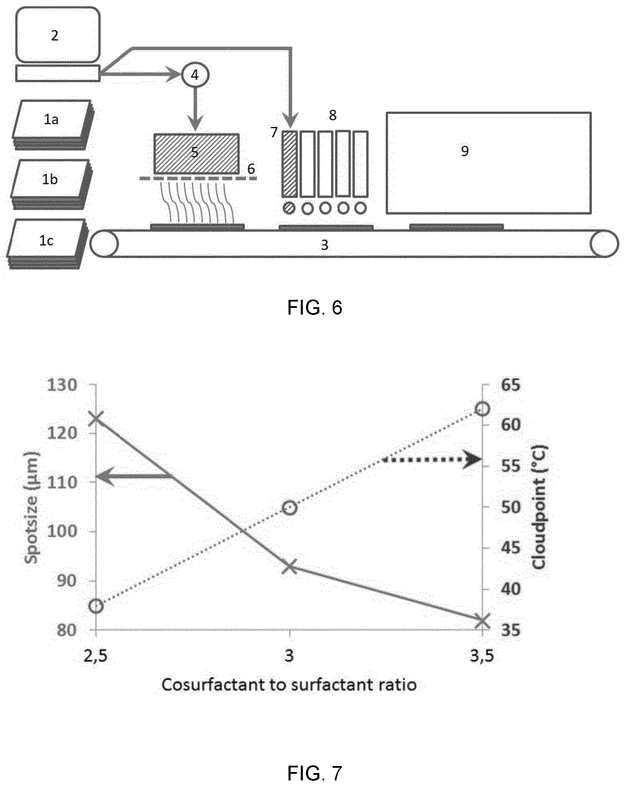

Also more complex direct printing apparatuses and/or partial combinations of the ones shown in Figs. 3 to 5 are possible. One more complex direct printing apparatus is shown in Fig. 6.

As shown in Fig. 6 different recording media 1a, 1b and 1c with different porosity and/or solvent absorption characteristics, which furthermore can also differ in other characteristics like heat conductivity, reflectivity, etc. can be supplied and transported via transport unit 3, e.g. a belt. A database 2 containing e.g. a set of basic parameters regarding thermal behavior as well as fluid transport properties representative for each class of recording media is contained, which is directed to a controller 4. Each class of recording media is specified in database 2 of Fig. 6 by a certain level of infra-red absorption, specific heat capacity, thermal conductivity, fluid absorption, surface energy, porosity and/or surface roughness, etc. i.e. parameters which can influence the behavior of the pre-treatment liquid on the recording medium. The controller 4 shown in Fig. 6 here can regulate the power supplied to the heater 5 (also called pre-heater) and can be controlled according to data in database 2. For example, preheating can be deactivated for any type of recording medium which requires a well-spreading primer to prevent inter-color bleeding while maintaining print robustness, i.e. non-porous and/or not solvent absorbing recording media. Preheating can be activated for other recording media which require a well penetrating primer, i.e. solvent-absorbing and/or porous recording media. Heating can be adjusted to ensure that the temperature of at least one side of the recording medium exceeds the cloud point of the primer, e.g. by 2 to 3 degrees Celsius, by the time the recording medium reaches the primer application and print section to enhance color intensity while preventing paper curl. Excessive heating, e.g. of more than 10 degrees, should be avoided. The heater 5 preferably is configured to heat fast and homogeneous and should be well controllable, e.g. as in the case of a heater based on IR radiation. Only at least one (the top) surface of the recording medium has to be heated to effectively influence spreading behavior. Infra-red radiation is very efficient in selective heating of the surface. The dosage of heating can be controlled by optional shutter 6. The unit for applying the pre-treatment liquid 7, e.g. a dispenser, can also be controlled to apply a specific amount of pre-treatment liquid by data in database 2, e.g. small amounts for not solvent-absorbing and/or non-porous recording media or large for solvent-absorbing or porous recording media which can be penetrated. Further contained are units for printing an ink or other print fluids 8 and a fixation unit 9.

In alternative embodiments the unit 7 can be divided in two units as shown in Fig. 5. Further, also a humidifier can be contained in a direct printing apparatus of the present invention to supply e.g. a layer of water on top of the recording medium to further control spreading of the pre-treatment liquid. For example, the humidifier could be switched on for improved primer spreading for not-solvent absorbing and/or non-porous recording media, while it could be switched off in case of solvent-absorbing and/or porous recording media.

A fifth aspect of the present invention relates to a pre-treatment liquid comprising a first surfactant and a second surfactant, wherein the first surfactant is an alkoxylated surfactant, preferably an ethoxylated surfactant with a hydrophilic-lipophilic balance (HLB) <16, and the second surfactant is a hydrotrope and/or has a HLB >18, wherein the first surfactant is chosen from acetylenic nonionic surfactants, alcohol ethoxylates, nonionic silicone surfactants, and/or fluorinated nonionic surfactants, and/or wherein the second surfactant is chosen from amineoxide based surfactants, anionic surfactants, zwitterionic surfactant, amphotheric surfactants, sugar surfactants, and/or alkanediols.

The pre-treatment liquid of the fifth aspect is particularly the one used in the methods of the first and/or second method. Accordingly, descriptions and embodiments with regard to the methods of the present invention are also applicable to the pre-treatment liquid of the fifth aspect, and vice versa. Particularly, the first and second surfactant are the ones described in the methods of the first and/or second aspect.

According to certain embodiments a ratio of the first surfactant to the second surfactant is in a range from 2:1 to 4:1, preferably in a range from 2.2 :1 to 3.8:1, further preferably in a range between and including 2.5:1 to 3.5:1, and/or the pre-treatment liquid further comprises at least one salt, preferably at least one alkaline earth salt, further preferably at least one Mg salt. The salt, as well as other components of the pre-treatment liquid, and their respective contents, etc. are particularly as described for the methods of the first and second aspect.

As the pre-treatment liquid of the present invention may demix upon storage or transport at elevated temperatures if it has a low cloud point, it may be necessary to homogenize of mix it in the method of the first method. In such case the direct printing apparatus of the third or fourth aspect can contain a homogenizer for homogenizing and/or mixing the pre-treatment liquid.

Furthermore disclosed is an ink set, comprising the present pre-treatment liquid and at least one ink. In the ink set, the pre-treatment liquid is the one described above with regard to the present methods and the present pre-treatment liquid, and the at least one ink is not particularly restricted and can be one described with regard to the present methods.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### EXAMPLES

The present invention will now be described in detail with reference to several examples thereof. However, these examples are illustrative and do not limit the scope of the invention.

A series of three primers was prepared that contained two surfactants, one with a HLB < 16 and one with a HLB > 18 a different mass ratios. The first surfactant is an alkoxylated superwetter for excellent surface wetting, particularly the acetylenic nonionic surfactant Multiwet SU. This surfactant has a relatively low cloud point which is sensitive to tuning. At temperatures just below the cloud point, the effectivity of the surfactant was very high. Further below the cloud point the effectivity became lower and at any temperature above the cloud point this surfactant was mostly inactive. The other surfactant (N,N-dimethyl laurylamineoxide e.g. commercially available as Oxidet DM-20) had a much stronger tendency to penetrate a solvent-absorbing recording medium like paper, i.e. showed less spreading, and its effectivity is cloud point insensitive. When the cloud point approaches the printing temperature the surface spreading is increased, which is ideal for coated media. The primers further contained magnesium sulfate as salt and propylene glycol and glycerol as co-solvents, with water as solvent.

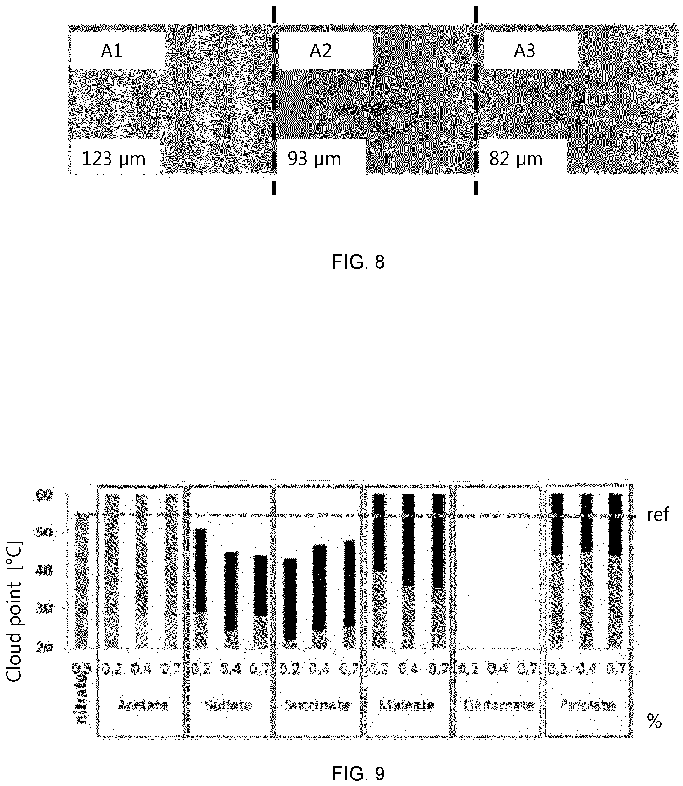

Results for the spot size on paper and the cloud point for the three primers are shown in Fig. 7. As seen from the figure, when the ratio of first surfactant to second surfactant was increased from 2.5 to 3.0 and further to 3.5, the difference between the cloud point and the jetting temperature becomes much larger and the printed spots become much smaller, because paper penetration is promoted more than surface spreading. The actual spot sizes are shown in the microscopic images in Fig. 8.

Further, the influence of a salt in the pre-treatment liquid was considered using different salts as shown in Fig. 9. With magnesium nitrate as reference, higher cloud points were obtained for magnesium acetate, magnesium maleate and magnesium pidolate, while lower cloud points were obtained for magnesium sulfate and magnesium succinate, showing that with different salts different cloud points can be obtained, i.e. that the pre-treatment liquid can be further tuned with the presence of a salt. For magnesium glutamate suitable results were only obtained for mixtures of Oxidet DM-20 (N,N-dimethyl laurylamineoxide) to Multiwet SU with a mass ratio >6.

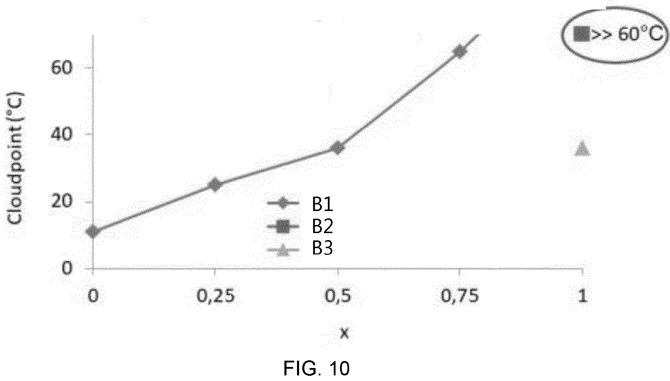

Another influence on the cloud point could be seen for different co-solvent ratios in different surfactants in Fig. 10, with Surfynol^{®} 485 at 0.7 wt.% in primer B1, Surfynol^{®}465 at 0.5 wt.% in primer B, and Surfynol^{®} 465 at 0.6 wt.% in primer B3 as first surfactant, the primers otherwise unchanged to the first primer above. For the three primers different contents of propylene glycol (x) and glycerol (1-x) were added, and the cloud point recorded. From Fig. 10 it is clear that apart from the surfactants, also the co-solvents can influence the cloud point.

The inventors have developed primers / pre-treatment liquids with a surfactant system having a well tunable cloud point phase-transition near the printing conditions. They found that very small changes in the primer composition (or primer processing) can cause very large changes in the cloud point and even larger changes in the flow and wetting behavior of the primer, as shown e.g. in Figs 7 and 8. The wetting properties of these primers can easily be tuned to not solvent-absorbing and/or non-porous recording media like coated media, where lateral spreading over the media surface is most important for the functionality of the primer. Alternatively the properties are just as easily tuned in the opposite direction which optimizes the wetting behavior specifically for solvent-absorbing and/or porous, e.g. uncoated, media, where paper penetration is preferred over spreading.

Any support, specifically for media range, robustness and curl, that can come from the composition of the primer - for which jetting accuracy is less critical and for which the risk of solid deposition on the nozzles applies less because it does not contain particles - can contribute to broadening of the working latitude of the ink. Thus, ink formulations can be simpler and more cost efficient when the primer performance is increased.

## Claims

1. A method of direct printing, comprising
- providing a recording medium (11);
- providing a pre-treatment liquid comprising a first surfactant and a second surfactant, wherein the first surfactant is an alkoxylated surfactant with a hydrophilic-lipophilic balance (HLB) < 16, and the second surfactant is a hydrotrope and/or has a HLB > 18 (12);
- adjusting the temperature of at least one surface of the recording medium to a temperature Tₚᵣᵢₙₜ below the cloud point T_{c} of the pre-treatment liquid in case the recording medium is not a solvent-absorbing and/or a non-porous recording medium, or
adjusting the temperature of at least one surface of the recording medium to a temperature above the cloud point T_{c} of the pre-treatment liquid medium in case the recording medium is a solvent-absorbing and/or a porous recording medium (13);
- applying the pre-treatment liquid on the at least one surface of the recording medium with the temperature adjusted below the cloud point T_{c} of the pre-treatment liquid or above the cloud point T_{c} of the pre-treatment liquid (14); and
- printing an image with at least one ink on the recording medium pre-treated with the pre-treatment liquid (15).

2. A method of direct printing, comprising
- providing a recording medium (11);
- providing a first liquid comprising a first surfactant and a second liquid comprising a second surfactant, wherein the first surfactant is an alkoxylated surfactant with a hydrophilic-lipophilic balance (HLB) < 16, and the second surfactant is a hydrotrope and/or has a HLB > 18 (12');
- preparing a pre-treatment liquid by mixing the first liquid and the second liquid (13');
- applying the pre-treatment liquid on at least one surface of the recording medium (14'); and
- printing an image with at least one ink on the recording medium pre-treated with the pre-treatment liquid (15'), wherein
the mixing ratio of the first and second liquid is adjusted such that the cloud point T_{c} of the pre-treatment liquid is above the temperature Tₚᵣᵢₙₜ of the at least one surface of the recording medium when applying the pre-treatment liquid on the at least one surface of the recording medium in case the recording medium is not a solvent-absorbing and/or a non-porous recording medium, or wherein
the mixing ratio of the first and second liquid is adjusted such that the cloud point T_{c} of the pre-treatment liquid is below the temperature Tₚᵣᵢₙₜ of the at least one surface of the recording medium when applying the pre-treatment liquid on the at least one surface of the recording medium in case the recording medium is a solvent-absorbing and/or a porous recording medium.

3. The method of claim 1 or 2, wherein the first surfactant is chosen from acetylenic nonionic surfactants, alcohol ethoxylates, nonionic silicone surfactants, and/or fluorinated nonionic surfactants, and/or wherein the second surfactant is chosen from amineoxide based surfactants, anionic surfactants, zwitterionic surfactant, amphotheric surfactants, sugar surfactants, and/or alkanediols, preferably wherein a weight ratio of the first surfactant to the second surfactant is in a range from 2:1 to 4:1.

4. The method of any one of the preceding claims, wherein the pre-treatment liquid further comprises at least one salt.

5. The method of any one of the preceding claims, wherein during applying a pre-treatment liquid on the at least one surface of the recording medium the relative humidity of the recording medium is adjusted and/or wherein the pre-treatment liquid is diluted with a solvent.

6. The method of any one of the preceding claims, wherein the applying a pre-treatment liquid on the at least one surface of the recording medium comprises applying a first liquid comprising the first surfactant and a second liquid comprising the second surfactant separately and forming the pre-treatment liquid on the at least one surface of the recording medium.

7. A direct printing apparatus, comprising,
- a unit for providing a recording medium (101), configured to provide a recording medium;
- at least one application unit (103) for applying a pre-treatment liquid (103a) on at least one surface of the recording medium (101a), configured to apply a pre-treatment liquid (103a) on at least one surface of the recording medium (101a), wherein
the pre-treatment liquid (103a) comprises a first surfactant and a second surfactant, wherein the first surfactant is an alkoxylated surfactant with a hydrophilic-lipophilic balance (HLB) < 16, and the second surfactant is a hydrotrope and/or has a HLB > 18;
- at least one unit for printing an ink (104), configured to print an ink (104a) on the recording medium pre-treated with the pre-treatment liquid;
further comprising:
- at least one heating or cooling unit configured to heat or cool the at least one surface of the recording medium such that the temperature Tₚᵣᵢₙₜ of the at least one surface of the recording medium is below the cloud point T_{c} of the pre-treatment liquid at the application of the pre-treatment liquid on the at least one surface of the recording medium in case the recording medium is not a solvent-absorbing and/or a non-porous recording medium, or such that the temperature Tₚᵣᵢₙₜ of the at least one surface of the recording medium is above the cloud point T_{c} of the pre-treatment liquid at the application of the pre-treatment liquid on the at least one surface of the recording medium in case the recording medium is a solvent-absorbing and/or a porous recording medium; and/or
- at least one mixing unit for the pre-treatment liquid (103*), configured to mix the pre-treatment liquid prior to applying the pre-treatment liquid in such a way that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium at the application of the pre-treatment liquid on the at least one surface of the recording medium in case the recording medium is a solvent-absorbing and/or a porous medium.

8. The direct printing apparatus of claim 7, further comprising
- a database comprising a set of parameters comprising the thermal behavior and/or the fluid transport properties of the recording medium and/or the data for cloud points T_{c} obtained by mixing different ratios of the first surfactant and the second surfactant; and
- at least one controller for controlling the at least one heating or cooling unit and/or the at least one mixing unit such that the cloud point T_{c} of the pre-treatment liquid is above the temperature Tₚᵣᵢₙₜ of the at least one surface of the recording medium at the application of the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium at the application of the pre-treatment liquid on the at least one surface of the recording medium is a solvent-absorbing and/or a porous medium.

9. A direct printing apparatus, comprising,
- a unit for providing a recording medium (101), configured to provide a recording medium;
- at least one first application unit for applying a first liquid (103a') comprising a first surfactant on at least one surface of the recording medium (101a), configured to apply the first liquid comprising the first surfactant on at least one surface of the recording medium,
- at least one second application unit for applying a second liquid (103a") comprising a second surfactant on the same at least one surface of the recording medium, configured to apply the second liquid comprising the second surfactant on the same at least one surface of the recording medium, wherein
the first surfactant is an alkoxylated surfactant with a hydrophilic-lipophilic balance (HLB) < 16, and the second surfactant is a hydrotrope and/or has a HLB > 18;
- at least one unit for printing an ink (104), configured to print an ink (104a) on the recording medium pre-treated with a pre-treatment liquid formed on the at least one surface of the recording medium by mixing of the first liquid comprising the first surfactant and the second liquid comprising a second surfactant;
further comprising:
- at least two first dosing units (103', 103") for the first liquid (103a') comprising the first surfactant and the second liquid (103a") comprising the second surfactant, respectively, configured to dose the first liquid comprising the first surfactant and the second liquid comprising the second surfactant in such a way that the cloud point T_{c} of a pre-treatment liquid formed on the at least one surface of the recording medium by mixing of the first liquid comprising the first surfactant and the second liquid comprising the second surfactant is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, or that the cloud point T_{c} of the pre-treatment liquid formed on the at least one surface of the recording medium by mixing of the first liquid comprising the first surfactant and the second liquid comprising the second surfactant is below the temperature Tₚᵣᵢₙₜ of the at least one surface of the recording medium when forming the pre-treatment liquid on the at least one surface of the recording medium in case the recording medium is a solvent-absorbing and/or a porous recording medium.

10. The direct printing apparatus of claim 9, further comprising
- a database comprising a set of parameters comprising the data for cloud points T_{c} obtained by mixing different ratios of the first surfactant and the second surfactant; and
- at least one controller for controlling the at least one dosing unit for the first liquid comprising the first surfactant and/or the second liquid comprising the second surfactant such that the cloud point T_{c} of the formed pre-treatment liquid is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium, or that the cloud point T_{c} of the formed pre-treatment liquid is below the temperature Tₚᵣᵢₙₜ of the at least one surface of the recording medium when forming the pre-treatment liquid on the at least one surface of the recording medium in case the recording medium is a solvent-absorbing and/or porous recording medium.

11. The direct printing apparatus of claim 9 or 10, further comprising
- at least one heating or cooling unit configured to heat or cool the at least one surface of the recording medium to a temperature Tₚᵣᵢₙₜ below the cloud point T_{c} of the pre-treatment liquid when forming the pre-treatment liquid on the at least one surface of the recording medium in case the recording medium is not a solvent-absorbing and/or a non-porous recording medium;
or to a temperature above the cloud point T_{c} of the pre-treatment liquid when forming the pre-treatment liquid on the at least one surface of the recording medium in case the recording medium is a solvent-absorbing and/or a porous recording medium.

12. The direct printing apparatus of claim 11, wherein the database further comprises a set of parameters comprising the thermal behavior and/or the fluid transport properties of the recording medium; and
the at least one controller controls the at least one heating or cooling unit such that the cloud point T_{c} of the pre-treatment liquid is above the temperature Tₚᵣᵢₙₜ of the at least one surface of the recording medium when forming the pre-treatment liquid on the at least one surface of the recording medium in case the recording medium is not a solvent-absorbing and/or a non-porous recording medium; or
that the cloud point T_{c} of the pre-treatment liquid is below the temperature Tₚᵣᵢₙₜ of the at least one surface of the recording medium when forming the pre-treatment liquid on the at least one surface of the recording medium in case the recording medium is a solvent-absorbing and/or a porous recording medium.

13. A pre-treatment liquid comprising a first surfactant and a second surfactant, wherein the first surfactant is an alkoxylated surfactant with a hydrophilic-lipophilic balance (HLB) < 16, and the second surfactant has a HLB >18, wherein the first surfactant is chosen from acetylenic nonionic surfactants, alcohol ethoxylates, nonionic silicone surfactants, and/or fluorinated nonionic surfactants, and/or wherein the second surfactant is chosen from amineoxide based surfactants, anionic surfactants, zwitterionic surfactant, amphotheric surfactants, sugar surfactants, and/or alkanediols.

14. The pre-treatment liquid of claim 13, wherein a ratio of the first surfactant to the second surfactant is in a range from 2:1 to 4:1, and/or
wherein the pre-treatment liquid further comprises at least one salt.

15. An ink set, comprising the pre-treatment liquid of claim 13 or 14 and at least one ink.

## Patentansprüche

1. Verfahren zum Direktdruck, umfassend
- Bereitstellen eines Aufzeichnungsmediums (11);
- Bereitstellen einer Vorbehandlungsflüssigkeit, die ein erstes Tensid und ein zweites Tensid enthält, wobei das erste Tensid ein alkoxyliertes Tensid mit einem hydrophil-lipophilen Gleichgewicht (HLB) < 16 ist und das zweite Tensid ein Hydrotrop ist und/oder einen HLB-Wert > 18 aufweist (12);
- Einstellung der Temperatur mindestens einer Oberfläche des Aufzeichnungsmediums auf eine Temperatur Tₚᵣᵢₙₜ unterhalb des Trübungspunkts T_{c} der Vorbehandlungsflüssigkeit, falls es sich bei dem Aufzeichnungsmedium nicht um ein lösungsmittelabsorbierendes und/oder ein nichtporöses Aufzeichnungsmedium handelt, oder
Einstellung der Temperatur mindestens einer Oberfläche des Aufzeichnungsmediums auf eine Temperatur oberhalb des Trübungspunkts T_{c} der Vorbehandlungsflüssigkeit, falls es sich bei dem Aufzeichnungsmedium um ein lösungsmittelabsorbierendes und/oder poröses Aufzeichnungsmedium handelt (13);
- Auftragen der Vorbehandlungsflüssigkeit auf die mindestens eine Oberfläche des Aufzeichnungsmediums, wobei die Temperatur unterhalb des Trübungspunkts T_{c} der Vorbehandlungsflüssigkeit oder oberhalb des Trübungspunkts T_{c} der Vorbehandlungsflüssigkeit eingestellt ist (14); und
- Drucken eines Bildes mit mindestens einer Tinte auf das mit der Vorbehandlungsflüssigkeit vorbehandelte Aufzeichnungsmedium (15).

2. Verfahren zum Direktdruck, umfassend
- Bereitstellen eines Aufzeichnungsmediums (11);
- Bereitstellen einer ersten Flüssigkeit, die ein erstes Tensid enthält, und einer zweiten Flüssigkeit, die ein zweites Tensid enthält, wobei das erste Tensid ein alkoxyliertes Tensid mit einem hydrophil-lipophilen Gleichgewicht (HLB) < 16 ist und das zweite Tensid ein Hydrotrop ist und/oder einen HLB-Wert > 18 aufweist (12');
- Herstellung einer Vorbehandlungsflüssigkeit durch Vermischen der ersten Flüssigkeit und der zweiten Flüssigkeit (13');
- Auftragen der Vorbehandlungsflüssigkeit auf mindestens eine Oberfläche des Aufzeichnungsmediums (14'); und
- Drucken eines Bildes mit mindestens einer Tinte auf das mit der Vorbehandlungsflüssigkeit vorbehandelte Aufzeichnungsmedium (15'), wobei Das Mischungsverhältnis der ersten und der zweiten Flüssigkeit wird so eingestellt, dass der Trübungspunkt T_{c}der Vorbehandlungsflüssigkeit über der Temperatur Tₚᵣᵢₙₜder mindestens einen Oberfläche des Aufzeichnungsmediums liegt, wenn die Vorbehandlungsflüssigkeit auf die mindestens eine Oberfläche des Aufzeichnungsmediums aufgetragen wird, sofern es sich bei dem Aufzeichnungsmedium nicht um ein lösungsmittelabsorbierendes und/oder ein nichtporöses Aufzeichnungsmedium handelt, oder wobei
das Mischungsverhältnis der ersten und der zweiten Flüssigkeit so eingestellt wird, dass der Trübungspunkt T_{c} der Vorbehandlungsflüssigkeit unterhalb der Temperatur Tₚᵣᵢₙₜ der mindestens einen Oberfläche des Aufzeichnungsmediums liegt, wenn die Vorbehandlungsflüssigkeit auf die mindestens eine Oberfläche des Aufzeichnungsmediums aufgetragen wird, falls es sich bei dem Aufzeichnungsmedium um ein lösungsmittelabsorbierendes und/oder poröses Aufzeichnungsmedium handelt.

3. Verfahren nach Patentanspruch 1 oder 2, wobei das erste Tensid ausgewählt ist aus acetylenhaltigen nichtionischen Tensiden, Alkoholethoxylaten, nichtionischen Silikontensiden und/oder fluorierten nichtionischen Tensiden, und/oder wobei das zweite Tensid ausgewählt ist aus Tensiden auf Aminoxidbasis, anionischen Tensiden, zwitterionischen Tensiden, amphoterischen Tensiden, Zuckertensiden und/oder Alkandiolen ausgewählt wird, wobei vorzugsweise das Gewichtsverhältnis des ersten Tensids zum zweiten Tensid in einem Bereich von 2:1 bis 4:1 liegt.

4. Verfahren nach einem der vorstehenden Patentansprüche, wobei die Vorbehandlungsflüssigkeit ferner mindestens ein Salz enthält.

5. Verfahren nach einem der vorstehenden Patentansprüche, wobei während des Aufbringens einer Vorbehandlungsflüssigkeit auf die mindestens eine Oberfläche des Aufzeichnungsmediums die relative Luftfeuchtigkeit des Aufzeichnungsmediums eingestellt wird und/oder wobei die Vorbehandlungsflüssigkeit mit einem Lösungsmittel verdünnt wird.

6. Verfahren nach einem der vorstehenden Patentansprüche, wobei das Aufbringen einer Vorbehandlungsflüssigkeit auf die mindestens eine Oberfläche des Aufzeichnungsmediums das getrennte Aufbringen einer ersten Flüssigkeit, die das erste Tensid enthält, und einer zweiten Flüssigkeit, die das zweite Tensid enthält, sowie das Bilden der Vorbehandlungsflüssigkeit auf der mindestens einen Oberfläche des Aufzeichnungsmediums umfasst.

7. Ein Direktdruckgerät, umfassend,
- eine Einheit zur Bereitstellung eines Aufzeichnungsmediums, die dazu ausgelegt ist, ein Aufzeichnungsmedium (101) bereitzustellen;
- mindestens eine Auftragseinheit (103) zum Auftragen einer Vorbehandlungsflüssigkeit (103a) auf mindestens eine Oberfläche des Aufzeichnungsmediums (101a), die dazu ausgelegt ist, eine Vorbehandlungsflüssigkeit (103a) auf mindestens eine Oberfläche des Aufzeichnungsmediums (101a) aufzutragen, wobei
die Vorbehandlungsflüssigkeit (103a) ein erstes Tensid und ein zweites Tensid umfasst, wobei das erste Tensid ein alkoxyliertes Tensid mit einem hydrophil-lipophilen Gleichgewicht (HLB) < 16 ist und das zweite Tensid ein Hydrotrop ist und/oder einen HLB-Wert > 18 aufweist;
- mindestens eine Einheit zum Drucken einer Tinte (104), die so ausgelegt ist, dass sie eine Tinte (104a) auf das mit der Vorbehandlungsflüssigkeit vorbehandelte Aufzeichnungsmedium druckt;
ferner umfassend:
- mindestens eine Heiz- oder Kühleinheit, die so ausgelegt ist, dass sie die mindestens eine Oberfläche des Aufzeichnungsmediums so erwärmt oder kühlt, dass die Temperatur T_{Druck} der mindestens einen Oberfläche des Aufzeichnungsmediums beim Auftragen der Vorbehandlungsflüssigkeit auf die mindestens eine Oberfläche des Aufzeichnungsmediums unterhalb des Trübungspunkts T_{c} der Vorbehandlungsflüssigkeit liegt, falls es sich bei dem Aufzeichnungsmedium nicht um ein lösungsmittelabsorbierendes und/oder ein nichtporöses Aufzeichnungsmedium handelt, oder derart, dass die Temperatur Tₚᵣᵢₙₜ der mindestens einen Oberfläche des Aufzeichnungsmediums bei dem Auftragen der Vorbehandlungsflüssigkeit auf die mindestens eine Oberfläche des Aufzeichnungsmediums über dem Trübungspunkt T_{c} der Vorbehandlungsflüssigkeit liegt, falls es sich bei dem Aufzeichnungsmedium um ein lösungsmittelabsorbierendes und/oder poröses Aufzeichnungsmedium handelt; und/oder
- mindestens eine Mischeinheit für die Vorbehandlungsflüssigkeit (103), die so ausgelegt ist, dass sie die Vorbehandlungsflüssigkeit vor dem Auftragen der Vorbehandlungsflüssigkeit derart mischt, dass der Trübungspunkt T_{c} der Vorbehandlungsflüssigkeit über der Temperatur Tₚᵣᵢₙₜ der mindestens einen Oberfläche des Aufzeichnungsmediums liegt, wenn die Vorbehandlungsflüssigkeit auf die mindestens eine Oberfläche des Aufzeichnungsmediums aufgetragen wird, sofern es sich bei dem Aufzeichnungsmedium nicht um ein lösungsmittelabsorbierendes und/oder ein nichtporöses Aufzeichnungsmedium handelt; oder
dass der Trübungspunkt T_{c} der Vorbehandlungsflüssigkeit unterhalb der Temperatur Tₚᵣᵢₙₜ der mindestens einen Oberfläche des Aufzeichnungsmediums liegt, wenn die Vorbehandlungsflüssigkeit auf die mindestens eine Oberfläche des Aufzeichnungsmediums aufgebracht wird, sofern es sich bei dem Aufzeichnungsmedium um ein lösungsmittelabsorbierendes und/oder poröses Medium handelt.

8. Die Direktdruckvorrichtung nach Patentanspruch 7, ferner umfassend
- eine Datenbank, die einen Satz von Parametern umfasst, der das thermische Verhalten und/oder die Fluidtransporteigenschaften des Aufzeichnungsmediums und/oder die Daten für die Trübungs spunkte T_{c} enthält, die durch Mischen unterschiedlicher Verhältnisse des ersten Tensids und des zweiten Tensids ermittelt wurden; und
- mindestens eine Steuereinheit zur Steuerung der mindestens einen Heiz- oder Kühleinheit und/oder der mindestens einen Mischeinheit, derart, dass der Trübungspunkt T_{c} der Vorbehandlungsflüssigkeit über der Temperatur Tₚᵣᵢₙₜ der mindestens einen Oberfläche des Aufzeichnungsmediums liegt, wenn die Vorbehandlungsflüssigkeit auf die mindestens eine Oberfläche des Aufzeichnungsmediums aufgetragen wird, sofern es sich bei dem Aufzeichnungsmedium nicht um ein lösungsmittelabsorbierendes und/oder ein nichtporöses Aufzeichnungsmedium handelt; oder
dass der Trübungspunkt T_{c} der Vorbehandlungsflüssigkeit unterhalb der Temperatur Tₚᵣᵢₙₜ der mindestens einen Oberfläche des Aufzeichnungsmediums liegt, wenn die Vorbehandlungsflüssigkeit auf die mindestens eine Oberfläche des Aufzeichnungsmediums aufgebracht wird, sofern es sich um ein lösungsmittelabsorbierendes und/oder poröses Medium handelt.

9. Eine Direktdruckvorrichtung, umfassend:
- eine Einheit zur Bereitstellung eines Aufzeichnungsmediums (101), die so ausgelegt ist, dass sie ein Aufzeichnungsmedium bereitstellt;
- mindestens eine erste Auftragseinheit zum Auftragen einer ersten Flüssigkeit (103a'), die ein erstes Tensid enthält, auf mindestens eine Oberfläche des Aufzeichnungsmediums (101a), die so ausgelegt ist, dass sie die erste Flüssigkeit, die das erste Tensid enthält, auf mindestens eine Oberfläche des Aufzeichnungsmediums aufträgt,
- mindestens eine zweite Auftragseinheit zum Auftragen einer zweiten Flüssigkeit (103a''), die ein zweites Tensid enthält, auf dieselbe mindestens eine Oberfläche des Aufzeichnungsmediums, die dazu ausgelegt ist, die zweite Flüssigkeit, die das zweite Tensid enthält, auf dieselbe mindestens eine Oberfläche des Aufzeichnungsmediums aufzutragen, wobei
das erste Tensid ein alkoxyliertes Tensid mit einem hydrophil-lipophilen Gleichgewicht (HLB) < 16 ist und das zweite Tensid ein Hydrotrop ist und/oder einen HLB-Wert > 18 aufweist;
- mindestens eine Einheit zum Drucken einer Tinte (104), die dazu ausgelegt ist, eine Tinte (104a) auf das Aufzeichnungsmedium aufzutragen, das mit einer Vorbehandlungsflüssigkeit vorbehandelt wurde, die auf der mindestens einen Oberfläche des Aufzeichnungsmediums durch Vermischen der ersten Flüssigkeit, die das erste Tensid enthält, und der zweiten Flüssigkeit, die ein zweites Tensid enthält, gebildet wurde;
ferner umfassend:
- mindestens zwei erste Dosiereinheiten (103', 103'') für die erste Flüssigkeit (103a'), die das erste Tensid enthält, bzw. die zweite Flüssigkeit (103a''), die das zweite Tensid enthält, die so ausgelegt sind, dass sie die erste Flüssigkeit, die das erste Tensid enthält, und die zweite Flüssigkeit, die das zweite Tensid enthält, derart dosieren, dass der Trübungspunkt T_{c} einer Vorbehandlungsflüssigkeit, die durch Vermischen der ersten Flüssigkeit, die das erste Tensid enthält, und der zweiten Flüssigkeit, die das zweite Tensid enthält, auf der mindestens einen Oberfläche des Aufzeichnungsmediums gebildet wird, über der Temperatur Tₚᵣᵢₙₜ der mindestens einen Oberfläche des Aufzeichnungsmediums liegt, wenn die Vorbehandlungsflüssigkeit auf der mindestens einen Oberfläche des Aufzeichnungsmediums gebildet wird, sofern es sich bei dem Aufzeichnungsmedium nicht um ein lösungsmittelabsorbierendes und/oder ein nichtporöses Aufzeichnungsmedium handelt, oder dass der Trübungspunkt T_{c} der Vorbehandlungsflüssigkeit_{,}die durch Vermischen der ersten Flüssigkeit, die das erste Tensid enthält, und der zweiten Flüssigkeit, die das zweite Tensid enthält, auf der mindestens einen Oberfläche des Aufzeichnungsmediums gebildet wird, unter der Temperatur Tₚᵣᵢₙₜ der mindestens einen Oberfläche des Aufzeichnungsmediums liegt, wenn die Vorbehandlungsflüssigkeit auf der mindestens einen Oberfläche des Aufzeichnungsmediums gebildet wird, sofern es sich bei dem Aufzeichnungsmedium um ein lösungsmittelabsorbierendes und/oder poröses Aufzeichnungsmedium handelt.

10. Die Direktdruckvorrichtung nach Patentanspruch 9, die ferner umfasst
- eine Datenbank, die einen Satz von Parametern umfasst, der die Daten für Trübungspunkte T_{c}enthält, _{die} durch Mischen unterschiedlicher Verhältnisse des ersten Tensids und des zweiten Tensids erhalten wurden; und
- mindestens eine Steuereinheit zur Steuerung der mindestens einen Dosiereinheit für die erste Flüssigkeit, die das erste Tensid enthält, und/oder die zweite Flüssigkeit, die das zweite Tensid enthält, derart, dass der Trübungspunkt T_{c} der gebildeten Vorbehandlungsflüssigkeit über der Temperatur Tₚᵣᵢₙₜ der mindestens einen Oberfläche des Aufzeichnungsmediums liegt, wenn die Vorbehandlungsflüssigkeit auf der mindestens einen Oberfläche des Aufzeichnungsmediums gebildet wird, sofern es sich bei dem Aufzeichnungsmedium nicht um ein lösungsmittelabsorbierendes und/oder ein nichtporöses Aufzeichnungsmedium handelt, oder dass der Trübungspunkt T_{c} der gebildeten Vorbehandlungsflüssigkeit unterhalb der Temperatur T_{Druck} der mindestens einen Oberfläche des Aufzeichnungsmediums liegt, wenn die Vorbehandlungsflüssigkeit auf der mindestens einen Oberfläche des Aufzeichnungsmediums gebildet wird, falls es sich bei dem Aufzeichnungsmedium um ein lösungsmittelabsorbierendes und/oder poröses Aufzeichnungsmedium handelt.

11. Die Direktdruckvorrichtung nach Patentanspruch 9 oder 10, ferner umfassend
- mindestens eine Heiz- oder Kühleinheit, die so ausgelegt ist, dass sie die mindestens eine Oberfläche des Aufzeichnungsmediums auf eine Temperatur Tₚᵣᵢₙₜ unterhalb des Trübungspunkts T_{c} der Vorbehandlungsflüssigkeit erwärmt oder abkühlt, wenn die Vorbehandlungsflüssigkeit auf der mindestens einen Oberfläche des Aufzeichnungsmediums gebildet wird, falls es sich bei dem Aufzeichnungsmedium nicht um ein lösungsmittelabsorbierendes und/oder porenfreies Aufzeichnungsmedium handelt;
oder auf eine Temperatur oberhalb des Trübungspunkts T_{c} der Vorbehandlungsflüssigkeit beim Aufbringen der Vorbehandlungsflüssigkeit auf die mindestens eine Oberfläche des Aufzeichnungsmediums, falls es sich bei dem Aufzeichnungsmedium um ein lösungsmittelabsorbierendes und/oder poröses Aufzeichnungsmedium handelt.

12. Die Direktdruckvorrichtung nach Anspruch 11, wobei die Datenbank ferner einen Satz von Parametern umfasst, der das thermische Verhalten und/oder die Fluidtransporteigenschaften des Aufzeichnungsmediums umfasst; und
die mindestens eine Steuerung die mindestens eine Heiz- oder Kühleinheit so steuert, dass der Trübungspunkt T_{c} der Vorbehandlungsflüssigkeit über der Temperatur Tₚᵣᵢₙₜ der mindestens einen Oberfläche des Aufzeichnungsmediums liegt, wenn die Vorbehandlungsflüssigkeit auf der mindestens einen Oberfläche des Aufzeichnungsmediums aufgebracht wird, falls es sich bei dem Aufzeichnungsmedium nicht um ein lösungsmittelabsorbierendes und/oder ein nichtporöses Aufzeichnungsmedium handelt; oder
dass der Trübungspunkt T_{c} der Vorbehandlungsflüssigkeit unterhalb der Temperatur Tₚᵣᵢₙₜ der mindestens einen Oberfläche des Aufzeichnungsmediums liegt, wenn die Vorbehandlungsflüssigkeit auf der mindestens einen Oberfläche des Aufzeichnungsmediums aufgebracht wird, falls es sich bei dem Aufzeichnungsmedium um ein lösungsmittelabsorbierendes und/oder poröses Aufzeichnungsmedium handelt.

13. Eine Vorbehandlungsflüssigkeit, die ein erstes Tensid und ein zweites Tensid umfasst, wobei das erste Tensid ein alkoxyliertes Tensid mit einem hydrophil-lipophilen Gleichgewicht (HLB) < 16 aufweist und das zweite Tensid einen HLB-Wert > 18 aufweist, wobei das erste Tensid aus acetylenischen nichtionischen Tensiden, Alkoholethoxylaten, nichtionischen Silikontensiden und/oder fluorierten nichtionischen Tensiden ausgewählt ist und/oder wobei das zweite Tensid aus Tensiden auf Aminoxidbasis, anionischen Tensiden, zwitterionischen Tensiden, amphoterischen Tensiden, Zuckertensiden und/oder Alkandiolen.

14. Die Vorbehandlungsflüssigkeit nach Patentanspruch 13, wobei das Verhältnis des ersten Tensids zum zweiten Tensid in einem Bereich von 2:1 bis 4:1 liegt, und/oder wobei die Vorbehandlungsflüssigkeit ferner mindestens ein Salz enthält.

15. Ein Tintenset, umfassend die Vorbehandlungsflüssigkeit nach Patentanspruch 13 oder 14 und mindestens eine Tinte.

## Revendications

1. Procédé d'impression directe, comprenant
- la mise à disposition d'un support d'enregistrement (11) ;
- la mise à disposition d'un liquide de prétraitement comprenant un premier tensioactif et un second tensioactif, le premier tensioactif étant un tensioactif alcoxylé présentant un indice d'équilibre hydrophile-lipophile (HLB) inférieur à 16, et le second tensioactif étant un hydrotrope et/ou présentant un indice HLB supérieur à 18 (12) ;
- régler la température d'au moins une surface du support d'enregistrement à une température Tₚᵣᵢₙₜ inférieure au point de trouble T_{c} du liquide de prétraitement dans le cas où le support d'enregistrement n'est pas un support d'enregistrement absorbant les solvants et/ou non poreux, ou
régler la température d'au moins une surface du support d'enregistrement à une température supérieure au point de trouble T_{c} du liquide de prétraitement lorsque le support d'enregistrement est un support absorbant les solvants et/ou un support poreux (13) ;
- appliquer le liquide de prétraitement sur ladite au moins une surface du support d'enregistrement, la température étant réglée en dessous du point de trouble T_{c} du liquide de prétraitement ou au-dessus du point de trouble T_{c} du liquide de prétraitement (14) ; et
- imprimer une image avec au moins une encre sur le support d'enregistrement prétraité avec le liquide de prétraitement (15).

2. Procédé d'impression directe, comprenant
- la mise à disposition d'un support d'enregistrement (11) ;
- la mise à disposition d'un premier liquide comprenant un premier tensioactif et d'un second liquide comprenant un second tensioactif, le premier tensioactif étant un tensioactif alcoxylé présentant un indice d'équilibre hydrophile-lipophile (HLB) < 16, et le second tensioactif étant un hydrotrope et/ou présentant un HLB > 18 (12') ;
- préparer un liquide de prétraitement en mélangeant le premier liquide et le deuxième liquide (13') ;
- appliquer le liquide de prétraitement sur au moins une surface du support d'enregistrement (14') ; et
- imprimer une image avec au moins une encre sur le support d'enregistrement prétraité avec le liquide de prétraitement (15'), dans lequel le rapport de mélange entre le premier et le deuxième liquide est ajusté de telle sorte que le point de trouble T_{c} du liquide de prétraitement soit supérieur à la température Tₚᵣᵢₙₜ de la ou des surfaces du support d' , lors de l'application du liquide de prétraitement sur la ou les surfaces dudit support d' , dans le cas où ce dernier n'est pas un support d' absorbant les solvants et/ou non poreux, ou dans lequel le rapport de mélange des premier et deuxième liquides est ajusté de telle sorte que le point de trouble T_{c} du liquide de prétraitement soit inférieur à la température Tᵢₘₚᵣₑₛₛᵢₒₙ de la au moins une surface du support d'enregistrement lors de l'application du liquide de prétraitement sur la au moins une surface du support d'enregistrement, dans le cas où le support d'enregistrement est un support d'enregistrement absorbant les solvants et/ou poreux.

3. Procédé selon la revendication 1 ou 2, dans lequel le premier tensioactif est choisi parmi les tensioactifs non ioniques acétyléniques, les éthoxylates d'alcool, les tensioactifs non ioniques à base de silicone et/ou les tensioactifs non ioniques fluorés, et/ou dans lequel le deuxième tensioactif est choisi parmi les tensioactifs à base d'oxyde d'amine, des tensioactifs anioniques, des tensioactifs zwitterioniques, des tensioactifs amphotères, des tensioactifs à base de sucre et/ou des alcanediols, de préférence dans lequel le rapport pondéral entre le premier tensioactif et le deuxième tensioactif est compris dans une plage allant de 2:1 à 4:1.

4. Procédé selon l'une quelconque des revendications précédentes, dans lequel le liquide de prétraitement comprend en outre au moins un sel.

5. Procédé selon l'une quelconque des revendications précédentes, dans lequel, lors de l'application d'un liquide de prétraitement sur la au moins une surface du support d'enregistrement, l'humidité relative du support d'enregistrement est ajustée et/ou dans lequel le liquide de prétraitement est dilué avec un solvant.

6. Procédé selon l'une quelconque des revendications précédentes, dans lequel l'application d'un liquide de prétraitement sur la au moins une surface du support d'enregistrement comprend l'application séparée d'un premier liquide comprenant le premier tensioactif et d'un second liquide comprenant le second tensioactif, et la formation du liquide de prétraitement sur la au moins une surface du support d'enregistrement.

7. Appareil d'impression directe, comprenant :
- une unité de fourniture d'un support d'enregistrement, configurée pour fournir un support d'enregistrement (101) ;
- au moins une unité d'application (103) destinée à appliquer un liquide de prétraitement (103a) sur au moins une surface du support d'enregistrement (101a), configurée pour appliquer un liquide de prétraitement (103a) sur au moins une surface du support d'enregistrement (101a), dans lequel
le liquide de prétraitement (103a) comprend un premier tensioactif et un deuxième tensioactif, le premier tensioactif étant un tensioactif alcoxylé présentant un équilibre hydrophile-lipophile (HLB) < 16, et le deuxième tensioactif étant un hydrotrope et/ou présentant un HLB > 18 ;
- au moins une unité d'impression d'encre (104), configurée pour imprimer une encre (104a) sur le support d'enregistrement prétraité avec le liquide de prétraitement ; comprenant en outre :
- au moins une unité de chauffage ou de refroidissement configurée pour chauffer ou refroidir ladite au moins une surface du support d'enregistrement de telle sorte que la température Tᵢₘₚᵣₑₛₛᵢₒₙ de ladite au moins une surface du support d'enregistrement soit inférieure au point de trouble T_{c} du liquide de prétraitement lors de l'application de ce dernier sur ladite au moins une surface du support d'enregistrement, dans le cas où le support d'enregistrement n'est pas un support absorbant les solvants et/ou un support non poreux, ou de telle sorte que la température Tᵢₘₚᵣₑₛₛᵢₒₙ de la ou des surfaces du support d'enregistrement soit supérieure au point de trouble T_{c} du liquide de prétraitement lors de l'application de ce dernier sur la ou les surfaces du support d'enregistrement, dans le cas où le support d'enregistrement est un support absorbant les solvants et/ou un support poreux ; et/ou
- au moins une unité de mélange pour le liquide de prétraitement (103), configurée pour mélanger le liquide de prétraitement avant son application, de telle sorte que le point de trouble T_{c} du liquide de prétraitement soit supérieur à la température Tₚᵣᵢₙₜ de la au moins une surface du support d'enregistrement lors de l'application du liquide de prétraitement sur la au moins une surface du support d'enregistrement, dans le cas où le support d'enregistrement n'est pas un support d'enregistrement absorbant les solvants et/ou non poreux ; ou
que le point de trouble T_{c} du liquide de prétraitement soit inférieur à la température Tᵢₘₚᵣₑₛₛᵢₒₙ de la au moins une surface du support d'enregistrement au moment de l'application du liquide de prétraitement sur la au moins une surface du support d'enregistrement, dans le cas où le support d'enregistrement est un support absorbant les solvants et/ou un support poreux.

8. L'appareil d'impression directe selon la revendication 7, comprenant en outre
- une base de données comprenant un ensemble de paramètres relatifs au comportement thermique et/ou aux propriétés de transport des fluides du support d'enregistrement et/ou les données relatives aux points de trouble T_{c} obtenues en mélangeant différents rapports entre le premier tensioactif et le deuxième tensioactif ; et
- au moins un contrôleur destiné à commander la ou les unités de chauffage ou de refroidissement et/ou la ou les unités de mélange, de telle sorte que le point de trouble T_{c} du liquide de prétraitement soit supérieur à la température Tₚᵣᵢₙₜ de la au moins une surface du support d'enregistrement lors de l'application du liquide de prétraitement sur la au moins une surface du support d'enregistrement, dans le cas où le support d'enregistrement n'est pas un support d'enregistrement absorbant les solvants et/ou non poreux ; ou
que le point de trouble T_{c} du liquide de prétraitement soit inférieur à la température Tᵢₘₚᵣₑₛₛᵢₒₙ de la au moins une surface du support d'enregistrement lors de l'application du liquide de prétraitement sur la au moins une surface du support d'enregistrement, lorsque ce dernier est un support absorbant les solvants et/ou un support poreux.

9. Appareil d'impression directe, comprenant :
- une unité destinée à fournir un support d'enregistrement (101), configurée pour fournir un support d'enregistrement ;
- au moins une première unité d'application destinée à appliquer un premier liquide (103a') comprenant un premier tensioactif sur au moins une surface du support d'enregistrement (101a), configurée pour appliquer le premier liquide comprenant le premier tensioactif sur au moins une surface du support d'enregistrement,
- au moins une deuxième unité d'application destinée à appliquer un deuxième liquide (103a'') comprenant un deuxième tensioactif sur la même au moins une surface du support d'enregistrement, configurée pour appliquer le deuxième liquide comprenant le deuxième tensioactif sur la même au moins une surface du support d'enregistrement, dans laquelle
le premier tensioactif est un tensioactif alcoxylé présentant un équilibre hydrophile-lipophile (HLB) < 16, et le deuxième tensioactif est un hydrotrope et/ou présente un HLB > 18 ;
- au moins une unité d'impression d'encre (104), configurée pour imprimer une encre (104a) sur le support d'enregistrement prétraité avec un liquide de prétraitement formé sur ladite au moins une surface du support d'enregistrement par mélange du premier liquide comprenant le premier tensioactif et du deuxième liquide comprenant un deuxième tensioactif ;
comprenant en outre :
- au moins deux premières unités de dosage (103', 103'') pour le premier liquide (103a') comprenant le premier tensioactif et le deuxième liquide (103a'') comprenant le deuxième tensioactif, respectivement, configurées pour doser le premier liquide comprenant le premier tensioactif et le deuxième liquide comprenant le deuxième tensioactif de telle sorte que le point de trouble T_{c} d'un liquide de prétraitement formé sur la au moins une surface du support d'enregistrement par mélange du premier liquide comprenant le premier tensioactif et du deuxième liquide comprenant le deuxième tensioactif soit supérieure à la température Tᵢₘₚᵣₑₛₛᵢₒₙ de la au moins une surface du support d'enregistrement lors de la formation du liquide de prétraitement sur la au moins une surface du support d'enregistrement, dans le cas où le support d'enregistrement n'est pas un support d'enregistrement absorbant les solvants et/ou non poreux, ou que le point de trouble T_{c} du liquide de prétraitement formé sur la ou les surfaces du support d'enregistrement par mélange du premier liquide comprenant le premier tensioactif et du deuxième liquide comprenant le deuxième tensioactif est inférieure à la température Tᵢₘₚᵣₑₛₛᵢₒₙ de la ou des surfaces du support d'enregistrement lors de la formation du liquide de prétraitement sur la ou les surfaces du support d'enregistrement, dans le cas où le support d'enregistrement est un support d'enregistrement absorbant les solvants et/ou poreux.

10. Appareil d'impression directe selon la revendication 9, comprenant en outre
- une base de données comprenant un ensemble de paramètres comprenant les données relatives aux points de trouble T_{c} obtenues en mélangeant différents rapports entre le premier tensioactif et le deuxième tensioactif ; et
- au moins un contrôleur destiné à commander la ou les unités de dosage du premier liquide comprenant le premier tensioactif et/ou du deuxième liquide comprenant le deuxième tensioactif, de telle sorte que le point de trouble T_{c} du liquide de prétraitement formé soit supérieur à la température T_{d'impression} de la au moins une surface du support d'enregistrement lors de la formation du liquide de prétraitement sur la au moins une surface du support d'enregistrement, dans le cas où le support d'enregistrement n'est pas un support d'enregistrement absorbant les solvants et/ou non poreux, ou que le point de trouble T_{c} du liquide de prétraitement formé soit inférieur à la température Tᵢₘₚᵣₑₛₛᵢₒₙ de la au moins une surface du support d'enregistrement lors de la formation du liquide de prétraitement sur la au moins une surface du support d'enregistrement, dans le cas où le support d'enregistrement est un support d'enregistrement absorbant les solvants et/ou poreux.

11. Appareil d'impression directe selon la revendication 9 ou 10, comprenant en outre
- au moins une unité de chauffage ou de refroidissement configurée pour chauffer ou refroidir la au moins une surface du support d'enregistrement à une température Tᵢₘₚᵣₑₛₛᵢₒₙ inférieure au point de trouble T_{c} du liquide de prétraitement lors de la formation dudit liquide de prétraitement sur la au moins une surface du support d'enregistrement, dans le cas où le support d'enregistrement n'est pas un support d'enregistrement absorbant les solvants et/ou non poreux ;
ou à une température supérieure au point de trouble T_{c} du liquide de prétraitement lors de l'application de ce dernier sur ladite au moins une surface du support d'enregistrement, dans le cas où le support d'enregistrement est un support d'enregistrement absorbant les solvants et/ou poreux.

12. Appareil d'impression directe selon la revendication 11, dans lequel la base de données comprend en outre un ensemble de paramètres comprenant le comportement thermique et/ou les propriétés de transport des fluides du support d'enregistrement ; et le au moins un contrôleur commande la au moins une unité de chauffage ou de refroidissement de telle sorte que le point de trouble T_{c} du liquide de prétraitement soit supérieur à la température Tᵢₘₚᵣₑₛₛᵢₒₙ de la au moins une surface du support d'enregistrement lors de la formation du liquide de prétraitement sur la au moins une surface du support d'enregistrement, dans le cas où le support d'enregistrement n'est pas un support d'enregistrement absorbant les solvants et/ou un support d'enregistrement non poreux ; ou
que le point de trouble T_{c} du liquide de prétraitement soit inférieur à la température Tₚᵣᵢₙₜ de la au moins une surface du support d'enregistrement lors de l'application du liquide de prétraitement sur la au moins une surface du support d'enregistrement, dans le cas où le support d'enregistrement est un support d'enregistrement absorbant les solvants et/ou poreux.

13. Liquide de prétraitement comprenant un premier tensioactif et un deuxième tensioactif, dans lequel le premier tensioactif est un tensioactif alcoxylé présentant un équilibre hydrophile-lipophile (HLB) < 16, et le deuxième tensioactif présente un HLB > 18, le premier tensioactif étant choisi parmi les tensioactifs non ioniques acétyléniques, les éthoxylates d'alcool, les tensioactifs non ioniques à base de silicone et/ou les tensioactifs non ioniques fluorés, et/ou le deuxième tensioactif étant choisi parmi les tensioactifs à base d'oxyde d'amine, des tensioactifs anioniques, des tensioactifs zwitterioniques, des tensioactifs amphotères, des tensioactifs dérivés de sucres et/ou des alcanediols.

14. Le liquide de prétraitement selon la revendication 13, dans lequel le rapport entre le premier tensioactif et le deuxième tensioactif se situe dans une plage comprise entre 2:1 et 4:1, et/ou
dans lequel le liquide de prétraitement comprend en outre au moins un sel.

15. Ensemble d'encres, comprenant le liquide de prétraitement selon les revendications 13 ou 14 et au moins une encre.
